# EUROPEAN PATENT APPLICATION

(11) **EP 4 422 205 A1**
(43) Date of publication of application: **28.08.2024**
(21) Application number: 22906638.6
(22) Date of filing: 15.12.2022
(51) Int. Cl.: H04R 1/10

(54) **EARPHONE CONTROL METHOD, RELATED SYSTEM AND STORAGE MEDIUM**

(30) Priority: 16.12.2021 CN 202111545967
(71) Applicant: Huawei Technologies Co., Ltd., Shenzhen, Guangdong 518129 (CN)
(72) Inventor: WU, Wenhao, Shenzhen, Guangdong 518129 (CN); BAI, Yunpeng, Shenzhen, Guangdong 518129 (CN); XU, Qiang, Shenzhen, Guangdong 518129 (CN); ZENG, Yuhao, Shenzhen, Guangdong 518129 (CN); DING, Jiong, Shenzhen, Guangdong 518129 (CN); ZHANG, Xianchun, Shenzhen, Guangdong 518129 (CN); DONG, Mingjie, Shenzhen, Guangdong 518129 (CN)
(74) Representative: Körber, Martin Hans
(86) International application number: PCT/CN2022/139234
(87) International publication number: WO 2023/109893

(57) **Abstract**

Embodiments of this application provide a headset control method, a related system, and a storage medium. The method includes: detecting gesture information; determining, based on the gesture information, a gesture executed by a user, where the gesture information is an ambient signal captured by a headset, and the gesture includes either of ear covering that forms a cavity around the headset and listening that forms an open reflective surface around the headset; and adjusting a mode of the headset to a target mode based on the gesture executed by the user. The gesture executed by the user is determined based on the ambient signal captured by the headset, to adjust the mode of the headset to the target mode. According to this means, the operation of ear covering is natural, is more user-friendly, and is simpler to operate. In addition, the user does not need to learn too much, and no additional new hardware needs to be added, thereby implementing headset control and improving user experience.

## Description

This application claims priority to Chinese Patent Application No. 202111545967.4, filed with the China National Intellectual Property Administration on December 16, 2021 and entitled "HEADSET CONTROL METHOD, RELATED SYSTEM, AND STORAGE MEDIUM", which is incorporated herein by reference in its entirety.

### TECHNICAL FIELD

This application relates to the field of electronic device technologies, and in particular, to a headset control method, a related system, and a storage medium.

### BACKGROUND

With the rapid development of smartphones, people are increasingly not satisfied that wired headsets cannot be flexibly and conveniently used. With technological innovation, Bluetooth once again changes a connection mode of a user, and related products of major brands are expanding their Bluetooth headset markets and influences. In the field of headsets, a noise reduction function is generally provided. A noise reduction headset is provided with a dedicated noise reduction circuit. Currently, there are two types of noise reduction headsets: an active noise reduction headset and a passive noise reduction headset. The active noise reduction headset generates a reverse sound wave equal to external noise by using a noise reduction system, and neutralizes the noise, thereby achieving noise reduction effect. The passive noise reduction headset mainly surrounds ears to form closed spaces, or uses a sound insulation material such as a silicone earplug to block external noise.

Noise reduction switching operations of existing true wireless stereo (True Wireless Stereo, TWS) Bluetooth noise reduction headsets on the market are not unified, and learning costs are high. In addition, touch-based operation efficiency is low, and there is stethoscope effect.

Currently, noise reduction of headsets Airpods Pro and Freebuds Pro with noise reduction functions is enabled or disabled by pressing earbud stems, and left and right earphones can be symmetrically operated. Noise reduction of Galaxy Buds Pro/Live is enabled or disabled by pressing and holding a headset surface, and left and right earphones can be symmetrically operated. The foregoing headset noise reduction enabling and disabling operations need a special component, for example, a pressure sensor or a capacitor is required to detect an action. In addition, a misoperation may be easily caused between a long press and a short press. Interaction is not user-friendly, and learning costs of the user are high.

Noise reduction of another type of headset product in the market, such as Freebuds 3 and OPPO Enco W51, is enabled or disabled by tapping a left earphone twice. This operation manner also needs a special component, and left and right operations are asymmetric, so that the user needs to memorize the operations. The tapping manner also causes stethoscope effect, and user experience is poor.

### SUMMARY

This application discloses a headset control method, a related system, and a storage medium, so that a noise reduction function of a headset can be controlled without adding additional hardware, and user experience is good.

According to a first aspect, an embodiment of this application provides a headset control method, including: detecting gesture information; determining, based on the gesture information, a gesture executed by a user, where the gesture information is an ambient signal captured by a headset, and the gesture includes either of ear covering that forms a cavity around the headset and listening that forms an open reflective surface around the headset; and adjusting a mode of the headset to a target mode based on the gesture executed by the user.

An implementation of detecting the gesture information may be continuously obtaining the ambient signal or periodically obtaining the ambient signal, or may be obtaining the ambient signal and analyzing the signal by using a trigger mechanism. That the gesture information is obtained by detecting a change status of the ambient signal may be understood as that the gesture information is an ambient signal that meets a preset standard. The determining, based on the gesture information, the gesture executed by the user is implemented based on user interaction. In other words, when the user uses different gestures around the headset, the headset enters different control modes.

In this embodiment of this application, the gesture executed by the user is determined based on the ambient signal captured by the headset, to adjust the mode of the headset to the target mode based on the gesture. According to this method, the headset can be controlled without adding additional hardware, thereby improving user experience. In addition, the operation is simple, and the user does not need to learn too much. In addition, the operation of ear covering is natural, and is more user-friendly.

The ambient signal includes at least one of the following: an audio signal, a Bluetooth signal, an optical signal, and an ultrasonic signal.

In a first implementation, when the ambient signal is a segment of audio signal, the determining, based on the gesture information, a gesture executed by a user includes: performing Fourier transform on the audio signal to obtain a frequency domain signal of the audio signal; calculating a ratio of an average energy value of the frequency domain signal in a first preset frequency domain range to an energy average value of a frequency domain signal in a full frequency domain; and if the ratio is greater than a first preset threshold, determining that the user performs ear covering.

In this embodiment, the gesture executed by the user is determined based on a comparison between energy information of a preset frequency band in a segment of audio signal and a threshold. Because there is a phenomenon that energy of an ambient sound is concentrated on a feature frequency band due to a cavity formed by a hand and an ear, it is detected, based on the audio feature, that the user performs the operation of ear covering, thereby implementing headset control and improving user experience.

Based on the first implementation, if the ratio is less than a second preset threshold, it is determined that the user performs listening, where the second preset threshold is less than the first preset threshold.

In a second implementation, when the ambient signal is a segment of audio signal, the determining, based on the gesture information, a gesture executed by a user includes: performing Fourier transform on the audio signal to obtain a frequency domain signal of the audio signal; calculating a similarity value between frequency energy distribution of the frequency domain signal and preset frequency energy distribution; and if the similarity value is greater than the second preset threshold, determining that the user performs ear covering.

In this embodiment, the gesture executed by the user is determined based on a similarity value between frequency energy distribution of a frequency domain signal obtained based on an audio signal around the headset and preset frequency energy distribution, to adjust the mode of the headset to the target mode.

In a third implementation, when the ambient signal includes a first audio signal and a second audio signal, and a capturing time of the first audio signal is earlier than a capturing time of the second audio signal, the determining, based on the gesture information, a gesture executed by a user includes: performing Fourier transform on the first audio signal and the second audio signal respectively to obtain a frequency domain signal of the first audio signal and a frequency domain signal of the second audio signal; calculating a first ratio of an average energy value of the frequency domain signal of the second audio signal in a second preset frequency domain range to an energy average value of a frequency domain signal in a full frequency domain, a second ratio of an average energy value of the frequency domain signal of the first audio signal in the second preset frequency domain range to the energy average value of the frequency domain signal in the full frequency domain, a third ratio of an average energy value of the frequency domain signal of the second audio signal in a third preset frequency domain range to the energy average value of the frequency domain signal in the full frequency domain, and a fourth ratio of an average energy value of the frequency domain signal of the second audio signal in a fourth preset frequency domain range to the energy average value of the frequency domain signal in the full frequency domain, where a frequency in the second preset frequency domain range is lower than a frequency in the fourth preset frequency domain range, and a frequency in the third preset frequency domain range is higher than the frequency in the fourth preset frequency domain range; and when the first ratio is greater than the second ratio, if the third ratio is less than the fourth ratio and/or a ratio of the third ratio to the fourth ratio is greater than a ratio of a fifth ratio to a sixth ratio, determining that the user performs ear covering, where the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain.

In this embodiment, the gesture executed by the user is determined based on frequency energy distribution of frequency domain signals obtained based on two segments of audio signals that are around the headset and that are at different times, to adjust the mode of the headset to the target mode. It is unnecessary to perform determining by setting an additional parameter, thereby avoiding some misjudgments caused by improper parameter setting, and improving reliability of headset control.

In a fourth implementation, when the ambient signal is a segment of second audio signal, the determining, based on the gesture information, a gesture executed by a user includes: sending the second audio signal to a calculation unit, so that the calculation unit performs Fourier transform on the second audio signal and a first audio signal respectively to obtain a frequency domain signal of the first audio signal and a frequency domain signal of the second audio signal, where the first audio signal and the second audio signal are captured by different earphones; and receiving information sent by the calculation unit, and determining, based on the information, that the user performs ear covering, where the information indicates that a first ratio is greater than a second ratio and a third ratio is less than a fourth ratio, and/or a ratio of the third ratio to the fourth ratio is greater than a ratio of a fifth ratio to a sixth ratio, the first ratio is a ratio of an average energy value of the frequency domain signal of the second audio signal in a second preset frequency domain range to an average energy value of a frequency domain signal of a full frequency domain, the second ratio is a ratio of an average energy value of the frequency domain signal of the first audio signal in the second preset frequency domain range to the average energy value of the frequency domain signal of the full frequency domain, the third ratio is a ratio of an average energy value of the frequency domain signal of the second audio signal in a third preset frequency domain range to the average energy value of the frequency domain signal of the full frequency domain, the fourth ratio is a ratio of an average energy value of the frequency domain signal of the second audio signal in a fourth preset frequency domain range to the average energy value of the frequency domain signal of the full frequency domain, the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain, a frequency in the second preset frequency domain range is lower than a frequency in the fourth preset frequency domain range, and a frequency in the third preset frequency domain range is higher than the frequency in the fourth preset frequency domain range.

The calculation unit may be a calculation unit in the other earphone, or may be another intelligent device such as a mobile phone. This is not specifically limited in this solution.

The gesture executed by the user is determined based on frequency energy distribution of frequency domain signals obtained based on audio signals around the two earphones, to adjust the mode of the headset to the target mode. It is unnecessary to perform determining by setting an additional parameter, thereby avoiding some misjudgments caused by improper parameter setting, and improving reliability of headset control.

Based on the foregoing implementation, the method further includes: if a ratio of an average energy value of the frequency domain signal of the first audio signal in a fifth preset frequency domain range to the average energy value of the frequency domain signal of the full frequency domain and a ratio of an average energy value of the frequency domain signal of the second audio signal in the fifth preset frequency domain range to the average energy value of the frequency domain signal of the full frequency domain each are not greater than a third preset threshold or a ratio of an average energy value of the frequency domain signal of the first audio signal in a sixth preset frequency domain range to the average energy value of the frequency domain signal of the full frequency domain and a ratio of an average energy value of the frequency domain signal of the second audio signal in the sixth preset frequency domain range to the average energy value of the frequency domain signal of the full frequency domain are respectively greater than a ratio of an average energy value of the frequency domain signal of the first audio signal in a seventh preset frequency domain range to the average energy value of the frequency domain signal of the full frequency domain and a ratio of an average energy value of the frequency domain signal of the second audio signal in the seventh preset frequency domain range to the average energy value of the frequency domain signal of the full frequency domain, obtaining a Bluetooth signal of the headset, and obtaining time strength distribution of the Bluetooth signal; and if a strength of a Bluetooth signal in a first time period is lower than a strength of a Bluetooth signal in a second time period and the strength of the Bluetooth signal in the first time period is lower than a fourth preset threshold in preset duration, determining that the user performs ear covering, where the second time period is earlier than the first time period.

In this embodiment, when the gesture of ear covering cannot be determined based on the audio signal, the user gesture is further determined based on the Bluetooth signal.

Based on the foregoing implementation, the method includes: if a ratio of an average energy value of the frequency domain signal of the second audio signal in an eighth preset frequency domain range to the average energy value of the frequency domain signal of the full frequency domain is greater than the fourth preset threshold and a ratio of an average energy value of the frequency domain signal of the second audio signal in a ninth preset frequency domain range to the average energy value of the frequency domain signal of the full frequency domain is also greater than the fourth preset threshold, determining that the user performs listening.

An energy peak in the frequency energy distribution of the frequency domain signal is in a preset frequency range.

In this embodiment, in a noisy scenario, it may be determined, based on the energy peak in the frequency energy distribution of the frequency domain signal, that the user performs the gesture of ear covering, thereby improving accuracy and reliability of gesture determining.

Further, a frequency domain of the audio signal includes at least a first frequency band, a second frequency band, and a third frequency band, a last frequency of the first frequency band is a 1^{st} frequency of the second frequency band, a last frequency of the second frequency band is a 1^{st} frequency of the third frequency band, and a difference between a seventh ratio of an average energy value of the first frequency band to an average energy value of the second frequency band and an eighth ratio of the average energy value of the second frequency band to an average energy value of the third frequency band is greater than a fifth preset threshold.

In this embodiment, in a noisy scenario, it may be determined, based on energy distribution of three consecutive frequency bands, that the user performs the gesture of ear covering, thereby improving accuracy and reliability of gesture determining.

In a fifth implementation, when the ambient signal is a segment of Bluetooth signal, the determining, based on the gesture information, a gesture executed by a user includes: obtaining time strength distribution of the Bluetooth signal based on the Bluetooth signal; and if a strength of a Bluetooth signal in a first time period is lower than a strength of a Bluetooth signal in a second time period in the time strength distribution and the strength of the Bluetooth signal in the first time period is lower than a sixth preset threshold in preset duration, determining that the user performs ear covering, where the second time period is earlier than the first time period.

In this embodiment of this application, the gesture executed by the user is determined based on the Bluetooth signal around the headset, to adjust the mode of the headset to the target mode.

In an optional implementation, when the gesture executed by the user is ear covering, the target mode is either of a noise reduction enabled mode and a noise reduction transparent transmission disabled mode; when a current mode of the headset is a noise reduction transparent transmission disabled mode, the target mode is a noise reduction enabled mode; when a current mode of the headset is a noise reduction enabled mode, the target mode is a transparent transmission enabled mode; or when a current mode of the headset is a transparent transmission enabled mode, the target mode is a noise reduction transparent transmission disabled mode.

According to this means, diversity of headset mode control is improved, and user experience is improved.

In another optional implementation, when the gesture executed by the user is ear covering, the target mode is a noise reduction enabled mode; and when the gesture executed by the user is listening, the target mode is a transparent transmission enabled mode.

In an optional implementation, the method further includes: when a strength value of the Bluetooth signal of the headset is less than a seventh preset threshold, starting to detect the gesture information.

According to the trigger mechanism, power consumption of the headset is reduced, and user experience is improved.

In another optional implementation, the method further includes: when a preset signal is received, starting to detect the gesture information, where the preset signal indicates that a wearable device detects that the user raises a hand.

According to the trigger mechanism, power consumption of the headset is reduced, and user experience is improved.

According to a second aspect, an embodiment of this application provides a headset control method, including: capturing an ambient signal around a headset, and extracting a feature of the ambient signal; and adjusting a mode of the headset to a target mode based on energy strength of a preset frequency band in the extracted feature of the ambient signal.

In this embodiment of this application, the feature of the ambient signal around the headset is extracted, and the mode of the headset is adjusted based on the extracted feature of the ambient signal. According to this means, based on the existing headset, no additional sensor or the like needs to be added. In addition, the user operation is simpler, and the user does not need to learn too much, thereby improving user experience.

The ambient signal includes at least one of the following: an audio signal, an optical signal, and an ultrasonic signal.

In an implementation, when the ambient signal is a segment of audio signal, the extracting a feature of the ambient signal includes: performing Fourier transform on the audio signal to obtain a frequency domain signal of the audio signal, and calculating a ratio of an average energy value of a frequency domain signal in the first preset frequency domain range to an energy average value of a frequency domain signal in a full frequency domain; and the adjusting a mode of the headset to a target mode based on energy strength of a preset frequency band in the extracted feature of the ambient signal includes: if the ratio is greater than a first preset threshold, determining that the target mode is a first mode.

If the ratio is less than a preset threshold A, the target mode is a second mode, and the preset threshold A is less than the first preset threshold.

In another implementation, when the ambient signal is a segment of audio signal, the extracting a feature of the ambient signal includes: performing Fourier transform on the audio signal to obtain a frequency domain signal of the audio signal, and calculating a similarity value between frequency energy distribution of the frequency domain signal and preset frequency energy distribution; and the adjusting a mode of the headset to a target mode based on energy strength of a preset frequency band in the extracted feature of the ambient signal includes: if the similarity value is greater than a second preset threshold, determining that the target mode is a first mode.

In still another implementation, when the ambient signal includes a first audio signal and a second audio signal, and a capturing time of the first audio signal is earlier than a capturing time of the second audio signal, the extracting a feature of the ambient signal includes: performing Fourier transform on the first audio signal and the second audio signal respectively to obtain a frequency domain signal of the first audio signal and a frequency domain signal of the second audio signal, and calculating a first ratio of an average energy value of the frequency domain signal of the second audio signal in a second preset frequency domain range to an energy average value of a frequency domain signal in a full frequency domain, a second ratio of an average energy value of the frequency domain signal of the first audio signal in the second preset frequency domain range to the energy average value of the frequency domain signal in the full frequency domain, a third ratio of an average energy value of the frequency domain signal of the second audio signal in a third preset frequency domain range to the energy average value of the frequency domain signal in the full frequency domain, and a fourth ratio of an average energy value of the frequency domain signal of the second audio signal in a fourth preset frequency domain range to the energy average value of the frequency domain signal in the full frequency domain, where a frequency in the second preset frequency domain range is lower than a frequency in the fourth preset frequency domain range, and a frequency in the third preset frequency domain range is higher than the frequency in the fourth preset frequency domain range; and the adjusting a mode of the headset to a target mode based on energy strength of a preset frequency band in the extracted feature of the ambient signal includes: when the first ratio is greater than the second ratio, if the third ratio is less than the fourth ratio and/or a ratio of the third ratio to the fourth ratio is greater than a ratio of a fifth ratio to a sixth ratio, determining that the target mode is a first mode, where the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain.

The foregoing further includes: if a ratio of an average energy value of the frequency domain signal of the second audio signal in a fifth preset frequency domain range to the average energy value of the frequency domain signal of the full frequency domain is greater than a third preset threshold and a ratio of an average energy value of the frequency domain signal of the second audio signal in a sixth preset frequency domain range to the average energy value of the frequency domain signal of the full frequency domain is also greater than the third preset threshold, determining that the target mode is a second mode.

In an implementation, an energy peak in the frequency energy distribution of the frequency domain signal is in a preset frequency range.

In another implementation, a frequency domain of the audio signal includes at least a first frequency band, a second frequency band, and a third frequency band, a last frequency of the first frequency band is a 1^{st} frequency of the second frequency band, a last frequency of the second frequency band is a 1^{st} frequency of the third frequency band, and a difference between a seventh ratio of an average energy value of the first frequency band to an average energy value of the second frequency band and an eighth ratio of the average energy value of the second frequency band to an average energy value of the third frequency band is greater than a fourth preset threshold.

In an implementation, when the target mode is the first mode, the first mode is either of a noise reduction enabled mode and a noise reduction transparent transmission disabled mode; when a current mode of the headset is a noise reduction transparent transmission disabled mode, the first mode is a noise reduction enabled mode; when a current mode of the headset is a noise reduction enabled mode, the first mode is a transparent transmission enabled mode; or when a current mode of the headset is a transparent transmission enabled mode, the first mode is a noise reduction transparent transmission disabled mode.

In another implementation, when the target mode is the first mode, the first target mode is a noise reduction enabled mode; and when the target mode is the second mode, the second mode is a transparent transmission enabled mode.

In an implementation, the method further includes: when a strength value of a Bluetooth signal of the headset is less than a fifth preset threshold, starting to detect gesture information.

In another implementation, the method further includes: when a preset signal is received, starting to detect gesture information, where the preset signal indicates that a wearable device detects that the user raises a hand.

According to a third aspect, this application provides a headset control apparatus, including: a detection module, configured to detect gesture information; a signal processing module, configured to determine, based on the gesture information, a gesture executed by a user, where the gesture information is an ambient signal captured by a headset, and the gesture includes either of ear covering that forms a cavity around the headset and listening that forms an open reflective surface around the headset; and a noise reduction control module, configured to adjust a mode of the headset to a target mode based on the gesture executed by the user.

The ambient signal includes at least one of the following: an audio signal, a Bluetooth signal, an optical signal, and an ultrasonic signal.

In a first implementation, when the ambient signal is a segment of audio signal, the signal processing module is configured to: perform Fourier transform on the audio signal to obtain a frequency domain signal of the audio signal; calculate a ratio of an average energy value of the frequency domain signal in a first preset frequency domain range to an energy average value of a frequency domain signal in a full frequency domain; and if the ratio is greater than a first preset threshold, determine that the user performs ear covering.

In a second implementation, when the ambient signal is a segment of audio signal, the signal processing module is configured to: perform Fourier transform on the audio signal to obtain a frequency domain signal of the audio signal; calculate a similarity value between frequency energy distribution of the frequency domain signal and preset frequency energy distribution; and if the similarity value is greater than a second preset threshold, determine that the user performs ear covering.

In a third implementation, when the ambient signal includes a first audio signal and a second audio signal, and a capturing time of the first audio signal is earlier than a capturing time of the second audio signal, the signal processing module is configured to: perform Fourier transform on the first audio signal and the second audio signal respectively to obtain a frequency domain signal of the first audio signal and a frequency domain signal of the second audio signal; calculate a first ratio of an average energy value of the frequency domain signal of the second audio signal in a second preset frequency domain range to an energy average value of a frequency domain signal in a full frequency domain, a second ratio of an average energy value of the frequency domain signal of the first audio signal in the second preset frequency domain range to the energy average value of the frequency domain signal in the full frequency domain, a third ratio of an average energy value of the frequency domain signal of the second audio signal in a third preset frequency domain range to the energy average value of the frequency domain signal in the full frequency domain, and a fourth ratio of an average energy value of the frequency domain signal of the second audio signal in a fourth preset frequency domain range to the energy average value of the frequency domain signal in the full frequency domain, where a frequency in the second preset frequency domain range is lower than a frequency in the fourth preset frequency domain range, and a frequency in the third preset frequency domain range is higher than the frequency in the fourth preset frequency domain range; and when the first ratio is greater than the second ratio, if the third ratio is less than the fourth ratio and/or a ratio of the third ratio to the fourth ratio is greater than a ratio of a fifth ratio to a sixth ratio, determine that the user performs ear covering, where the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain.

In a fourth implementation, when the apparatus further includes a communication module, and when the ambient signal is a segment of second audio signal, the communication module is configured to send the second audio signal to a calculation unit, so that the calculation unit performs Fourier transform on the second audio signal and a first audio signal respectively to obtain a frequency domain signal of the first audio signal and a frequency domain signal of the second audio signal, where the first audio signal and the second audio signal are captured by different earphones; and the signal processing module is configured to: receive information sent by the calculation unit, and determine, based on the information, that the user performs ear covering, where the information indicates that a first ratio is greater than a second ratio and a third ratio is less than a fourth ratio, and/or a ratio of the third ratio to the fourth ratio is greater than a ratio of a fifth ratio to a sixth ratio, the first ratio is a ratio of an average energy value of the frequency domain signal of the second audio signal in a second preset frequency domain range to an average energy value of a frequency domain signal of a full frequency domain, the second ratio is a ratio of an average energy value of the frequency domain signal of the first audio signal in the second preset frequency domain range to the average energy value of the frequency domain signal of the full frequency domain, the third ratio is a ratio of an average energy value of the frequency domain signal of the second audio signal in a third preset frequency domain range to the average energy value of the frequency domain signal of the full frequency domain, the fourth ratio is a ratio of an average energy value of the frequency domain signal of the second audio signal in a fourth preset frequency domain range to the average energy value of the frequency domain signal of the full frequency domain, the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain, a frequency in the second preset frequency domain range is lower than a frequency in the fourth preset frequency domain range, and a frequency in the third preset frequency domain range is higher than the frequency in the fourth preset frequency domain range.

The detection module is further configured to: if a ratio of an average energy value of the frequency domain signal of the first audio signal in a fifth preset frequency domain range to the average energy value of the frequency domain signal of the full frequency domain and a ratio of an average energy value of the frequency domain signal of the second audio signal in the fifth preset frequency domain range to the average energy value of the frequency domain signal of the full frequency domain each are not greater than a third preset threshold or a ratio of an average energy value of the frequency domain signal of the first audio signal in a sixth preset frequency domain range to the average energy value of the frequency domain signal of the full frequency domain and a ratio of an average energy value of the frequency domain signal of the second audio signal in the sixth preset frequency domain range to the average energy value of the frequency domain signal of the full frequency domain are respectively greater than a ratio of an average energy value of the frequency domain signal of the first audio signal in a seventh preset frequency domain range to the average energy value of the frequency domain signal of the full frequency domain and a ratio of an average energy value of the frequency domain signal of the second audio signal in the seventh preset frequency domain range to the average energy value of the frequency domain signal of the full frequency domain, obtain a Bluetooth signal of the headset, and obtain time strength distribution of the Bluetooth signal; and the signal processing module is configured to: if a strength of a Bluetooth signal in a first time period is lower than a strength of a Bluetooth signal in a second time period and the strength of the Bluetooth signal in the first time period is lower than a fourth preset threshold in preset duration, determine that the user performs ear covering, where the second time period is earlier than the first time period.

In another implementation, the signal processing module is configured to: if a ratio of an average energy value of the frequency domain signal of the second audio signal in an eighth preset frequency domain range to the average energy value of the frequency domain signal of the full frequency domain is greater than the fourth preset threshold and a ratio of an average energy value of the frequency domain signal of the second audio signal in a ninth preset frequency domain range to the average energy value of the frequency domain signal of the full frequency domain is also greater than the fourth preset threshold, determine that the user performs listening.

In an optional implementation, an energy peak in the frequency energy distribution of the frequency domain signal is in a preset frequency range.

In another optional implementation, a frequency domain of the audio signal includes at least a first frequency band, a second frequency band, and a third frequency band, a last frequency of the first frequency band is a 1^{st} frequency of the second frequency band, a last frequency of the second frequency band is a 1^{st} frequency of the third frequency band, and a difference between a seventh ratio of an average energy value of the first frequency band to an average energy value of the second frequency band and an eighth ratio of the average energy value of the second frequency band to an average energy value of the third frequency band is greater than a fifth preset threshold.

In an alternative solution, when the ambient signal is a segment of Bluetooth signal, the signal processing module is configured to: obtain time strength distribution of the Bluetooth signal based on the Bluetooth signal; and if a strength of a Bluetooth signal in a first time period is lower than a strength of a Bluetooth signal in a second time period in the time strength distribution and the strength of the Bluetooth signal in the first time period is lower than a sixth preset threshold in preset duration, determine that the user performs ear covering, where the second time period is earlier than the first time period.

When the gesture executed by the user is ear covering, the target mode is either of a noise reduction enabled mode and a noise reduction transparent transmission disabled mode; when a current mode of the headset is a noise reduction transparent transmission disabled mode, the target mode is a noise reduction enabled mode; when a current mode of the headset is a noise reduction enabled mode, the target mode is a transparent transmission enabled mode; or when a current mode of the headset is a transparent transmission enabled mode, the target mode is a noise reduction transparent transmission disabled mode.

In an alternative solution, when the gesture executed by the user is ear covering, the target mode is a noise reduction enabled mode; and when the gesture executed by the user is listening, the target mode is a transparent transmission enabled mode.

Optionally, the apparatus further includes a triggering module, configured to: when a strength value of the Bluetooth signal of the headset is less than a seventh preset threshold, start to detect the gesture information.

In an alternative solution, the apparatus further includes a triggering module, configured to: when a preset signal is received, start to detect the gesture information, where the preset signal indicates that a wearable device detects that the user raises a hand.

According to a fourth aspect, this application provides a headset control apparatus, including: a signal capturing module, configured to capture an ambient signal around a headset; a signal processing module, configured to extract a feature of the ambient signal; and a noise reduction control module, configured to adjust a mode of the headset to a target mode based on energy strength of a preset frequency band in the extracted feature of the ambient signal.

The ambient signal includes at least one of the following: an audio signal, an optical signal, and an ultrasonic signal.

In an implementation, when the ambient signal is a segment of audio signal, the signal processing module is configured to: perform Fourier transform on the audio signal to obtain a frequency domain signal of the audio signal, and calculate a ratio of an average energy value of the frequency domain signal in a first preset frequency domain range to an energy average value of a frequency domain signal in a full frequency domain; and the noise reduction control module is configured to: if the ratio is greater than a first preset threshold, determine that the target mode is a first mode.

In another optional implementation, when the ambient signal is a segment of audio signal, the signal processing module is configured to: perform Fourier transform on the audio signal to obtain a frequency domain signal of the audio signal, and calculate a similarity value between frequency energy distribution of the frequency domain signal and preset frequency energy distribution; and the noise reduction control module is configured to: if the similarity value is greater than a second preset threshold, determine that the target mode is a first mode.

In still another optional implementation, when the ambient signal includes a first audio signal and a second audio signal, and a capturing time of the first audio signal is earlier than a capturing time of the second audio signal, the signal processing module is configured to: perform Fourier transform on the first audio signal and the second audio signal respectively to obtain a frequency domain signal of the first audio signal and a frequency domain signal of the second audio signal, and calculate a first ratio of an average energy value of the frequency domain signal of the second audio signal in a second preset frequency domain range to an energy average value of a frequency domain signal in a full frequency domain, a second ratio of an average energy value of the frequency domain signal of the first audio signal in the second preset frequency domain range to the energy average value of the frequency domain signal in the full frequency domain, a third ratio of an average energy value of the frequency domain signal of the second audio signal in a third preset frequency domain range to the energy average value of the frequency domain signal in the full frequency domain, and a fourth ratio of an average energy value of the frequency domain signal of the second audio signal in a fourth preset frequency domain range to the energy average value of the frequency domain signal in the full frequency domain, where a frequency in the second preset frequency domain range is lower than a frequency in the fourth preset frequency domain range, and a frequency in the third preset frequency domain range is higher than the frequency in the fourth preset frequency domain range; and the noise reduction control module is configured to: when the first ratio is greater than the second ratio, if the third ratio is less than the fourth ratio and/or a ratio of the third ratio to the fourth ratio is greater than a ratio of a fifth ratio to a sixth ratio, determine that the target mode is a first mode, where the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain.

The noise reduction control module is further configured to: if a ratio of an average energy value of the frequency domain signal of the second audio signal in a fifth preset frequency domain range to the average energy value of the frequency domain signal of the full frequency domain is greater than a third preset threshold and a ratio of an average energy value of the frequency domain signal of the second audio signal in a sixth preset frequency domain range to the average energy value of the frequency domain signal of the full frequency domain is also greater than the third preset threshold, determine that the target mode is a second mode.

Optionally, an energy peak in the frequency energy distribution of the frequency domain signal is in a preset frequency range.

Further, a frequency domain of the audio signal includes at least a first frequency band, a second frequency band, and a third frequency band, a last frequency of the first frequency band is a 1^{st} frequency of the second frequency band, a last frequency of the second frequency band is a 1^{st} frequency of the third frequency band, and a difference between a seventh ratio of an average energy value of the first frequency band to an average energy value of the second frequency band and an eighth ratio of the average energy value of the second frequency band to an average energy value of the third frequency band is greater than a fourth preset threshold.

In an implementation, when the target mode is the first mode, the first mode is either of a noise reduction enabled mode and a noise reduction transparent transmission disabled mode; when a current mode of the headset is a noise reduction transparent transmission disabled mode, the first mode is a noise reduction enabled mode; when a current mode of the headset is a noise reduction enabled mode, the first mode is a transparent transmission enabled mode; or when a current mode of the headset is a transparent transmission enabled mode, the first mode is a noise reduction transparent transmission disabled mode.

In another implementation, when the target mode is the first mode, the first target mode is a noise reduction enabled mode; and when the target mode is the second mode, the second mode is a transparent transmission enabled mode.

Optionally, the apparatus further includes a triggering module, configured to: when a strength value of a Bluetooth signal of the headset is less than a fifth preset threshold, start to detect gesture information.

Alternatively, the apparatus further includes a triggering module, configured to: when a preset signal is received, start to detect gesture information, where the preset signal indicates that a wearable device detects that the user raises a hand.

According to a fifth aspect, this application provides a computer storage medium, including computer instructions. When the computer instructions are run on an electronic device, the electronic device is enabled to perform the method according to any one of the possible implementations in the first aspect and/or the possible implementations in the second aspect.

According to a sixth aspect, an embodiment of this application provides a computer program product. When the computer program product runs on a computer, the computer is enabled to perform the method according to any one of the possible implementations in the first aspect and/or the possible implementations in the second aspect.

It may be understood that the apparatus according to the third aspect, the apparatus according to the fourth aspect, the computer storage medium according to the fifth aspect, or the computer program product according to the sixth aspect is configured to perform the method according to any one of the possible implementations in first aspect and the method according to any one of the possible implementations in the second aspect. Therefore, for beneficial effects that can be achieved by the method, refer to beneficial effects in the corresponding method. Details are not described herein again.

### BRIEF DESCRIPTION OF DRAWINGS

The following describes accompanying drawings used in embodiments of this application.
FIG. 1a is a schematic diagram of a gesture of ear covering according to an embodiment of this application;
FIG. 1b is a schematic diagram of a gesture of listening according to an embodiment of this application;
FIG. 1c is a schematic diagram of a structure of a headset according to an embodiment of this application;
FIG. 1d is a schematic diagram of a device connected to a headset according to an embodiment of this application;
FIG. 2 is a schematic flowchart of a headset control method according to an embodiment of this application;
FIG. 3a is a schematic flowchart of a first headset control method according to an embodiment of this application;
FIG. 3b is a schematic diagram of frequency energy distribution of a frequency domain signal according to an embodiment of this application;
FIG. 4a is a schematic flowchart of a second headset control method according to an embodiment of this application;
FIG. 4b is a schematic diagram of frequency energy distribution of a frequency domain signal according to an embodiment of this application;
FIG. 4c is another schematic diagram of frequency energy distribution of a frequency domain signal according to an embodiment of this application;
FIG. 4d is still another schematic diagram of frequency energy distribution of a frequency domain signal according to an embodiment of this application;
FIG. 5a is a schematic flowchart of a third headset control method according to an embodiment of this application;
FIG. 5b is a schematic diagram of frequency energy distribution of a frequency domain signal before and after ear covering according to an embodiment of this application;
FIG. 5c is another schematic diagram of frequency energy distribution of a frequency domain signal before and after ear covering according to an embodiment of this application;
FIG. 6 is a schematic flowchart of a fourth headset control method according to an embodiment of this application;
FIG. 7a is a schematic flowchart of a fifth headset control method according to an embodiment of this application;
FIG. 7b is a schematic diagram of a time strength curve of a Bluetooth signal according to an embodiment of this application;
FIG. 8a is a schematic flowchart of a sixth headset control method according to an embodiment of this application;
FIG. 8b is a schematic diagram of energy in different frequency bands of an operation of ear covering according to an embodiment of this application;
FIG. 8c is a schematic diagram of energy in different frequency bands corresponding to a case in which an ear of a user is covered and ambient noise is high according to an embodiment of this application;
FIG. 9 is a schematic flowchart of a seventh headset control method according to an embodiment of this application;
FIG. 10 is a schematic flowchart of still another headset control method according to an embodiment of this application;
FIG. 11 is a schematic diagram of a structure of a headset control apparatus according to an embodiment of this application;
FIG. 12 is a schematic diagram of a structure of another headset control apparatus according to an embodiment of this application; and
FIG. 13 is a schematic diagram of a structure of still another headset control apparatus according to an embodiment of this application.

### DESCRIPTION OF EMBODIMENTS

The following describes embodiments of this application with reference to the accompanying drawings in embodiments of this application. Terms used in implementations of embodiments of this application are merely used to explain specific embodiments of this application, and are not intended to limit this application.

Because interaction of control such as noise reduction of an existing headset is not very user-friendly, and additional hardware and the like need to be added, this solution provides a headset control method and apparatus, and a storage medium. No additional hardware needs to be added, and a detection method such as acoustics or optics may be used to identify a user operation, to implement headset control.

Embodiments of this solution relate to a gesture of ear covering and a gesture of listening. Ear covering is a natural manner of expressing resistance to external noise in the real world. Therefore, in this solution, this user action is detected by using a technical means, and noise reduction control of a headset is triggered based on this detected action, to implement a natural and low-cost interaction manner on a current headset such as a Bluetooth headset.

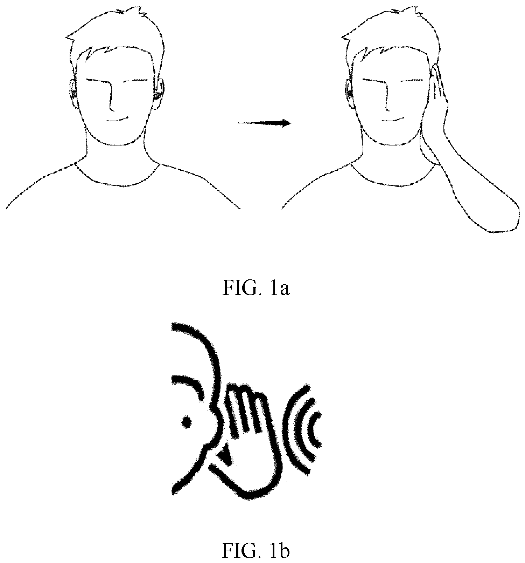

In this solution, ear covering may be understood as that a user wears a headset, and then a fully closed cavity is formed near the headset by using a hand. In this solution, the action of forming the fully closed cavity near the headset by using the hand is defined as an operation of ear covering. As shown in FIG. 1a, a hand of a user presents a specific protrusion (arch) shape, and a cavity is presented between an ear and the hand.

Listening is an action taken by a person when the person cannot hear clearly. In this solution, listening may be understood as an action that a user uses a hand to form an open reflective surface around a headset. In this solution, the action of using the hand to form the open reflective surface around the headset is defined as an operation of listening. As shown in FIG. 1b, a palm of a user is close to the rear of an ear, to form an open reflective surface.

It should be noted that this solution is merely described by using this as an example, and may also be another gesture. This is not specifically limited in this solution.

In this solution, the gesture operation performed by the user on the headset is detected, for example, a change of an audio signal is detected, to determine an action performed by the user, to control the headset. Specifically, a microphone in the headset detects a feature of an external sound signal, detects, based on the feature of the external sound signal or a change of the feature, that a corresponding user operation is ear covering, and enables or disables a noise reduction mode of the headset based on the operation of ear covering of the user; or further determines, based on a status of the headset at a previous moment and based on the operation of ear covering, that control to be triggered by the headset is starting a noise reduction mode and disabling a noise reduction mode or a transparent transmission mode. The foregoing uses only the audio signal as an example for description. Alternatively, the foregoing audio signal may also be another modal detection signal, for example, a Bluetooth signal, or a specific operation of the user is detected by using a photosensitive sensor, a proximity sensor, or the like. Certainly, a camera or the like may also be used for detection. This is not specifically limited in this solution.

This solution is applicable to a wired headset, a wireless headset, and the like, for example, a headphone or a true wireless stereo Bluetooth headset.

Headsets can be classified into headphones and earplugs by appearance. The headphone is a type of headset that is worn on a head, not inserted into an ear canal, and is different from an in-ear earplug. The headphones are generally classified into ear-packed headphones and ear-pressed headphones. An earmuff of the ear-packed headphone is large and wraps the whole ear inside, and the earmuff is pressed on a skin outside the ear. An earmuff of the ear-pressed headphone is pressed on the ear.

The earplugs can be classified into in-ear earphones and semi-in-ear earphones. An in-ear TWS earphone has a rubber plug that is deep into an ear canal and can be plugged tighter when being worn. The in-ear earphone is usually designed in a bean style, and a rubber plug is designed differently depending on a human ear. The semi-in-ear earphone do not have a rubber plug and have a long handle, which is more like hanging in an ear hole.

The true wireless stereo Bluetooth headset has a smaller size, lower delay, and good sound quality, and is gradually replacing a traditional wired headset and becoming a more convenient tool for music, drama follower, and game playing in daily life.

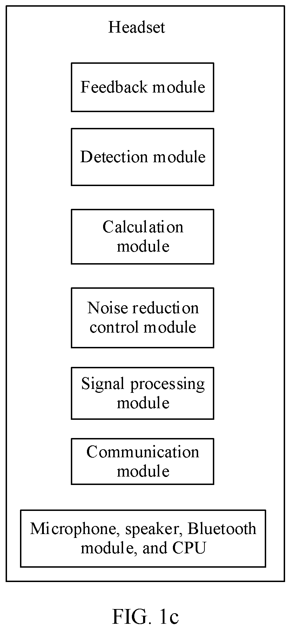

FIG. 1c is a schematic diagram of a structure of a headset according to an embodiment of this application. As shown in FIG. 1c, the headset includes a detection module, a calculation module, a feedback module, a noise reduction control module, a signal processing module, a communication module, a microphone, a speaker, a Bluetooth module, a CPU, and the like. The detection module is configured to detect input of a user, and a detected object may include a microphone for sound input (for example, voice input of the user or an ambient sound). The detection module may further include a touch sensor, configured to receive touch input of the user. For example, some headsets have functions of performing interaction by tapping, double tapping, or sliding on surfaces of the headsets. The feedback module may provide feedback for a user wearing a headset through sound, vibration, or the like. The calculation module is configured to complete calculation in a headset. The noise reduction control module is configured to control mode switching of noise reduction based on detected information. The signal processing module is configured to process received signal information, for example, an audio signal, a Bluetooth signal, or an optical signal. Noise reduction processing of the noise reduction control module may be completed in the signal processing module. The communication module is configured to exchange control and audio data information when an association is established between a headset and another device. The microphone is configured to receive external audio information. The speaker is configured to transmit a sound processed by the signal processing module to the outside.

The headset may further have a plurality of other sensor modules. For example, a motion sensor such as an accelerometer or a gyroscope may be used to detect a pose of the headset, an optical sensor is used to detect that the headset is taken out of a headset box, a touch sensor is used to detect a touch point of a finger on a surface of the headset, and sensors such as a capacitive sensor, a voltage sensor, an impedance sensor, a photosensitive sensor, a proximity sensor, and an image sensor are used to perform detection for various purposes.

In this solution, the user operation detected based on the change of the external audio signal may be implemented in the detection module, or may be completed in the signal processing module. The detection function may be completed by being integrated into another module such as a signal processing module. Certainly, this is not specifically limited in this solution.

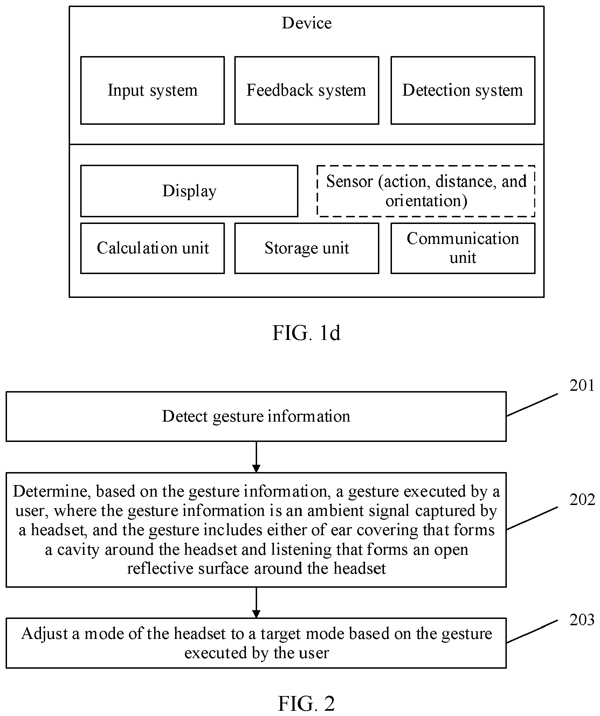

FIG. 1d is a schematic diagram of a device connected to a headset according to an embodiment of this application. The device may be, for example, a mobile phone, a tablet computer, or a smart television. It may be understood that the device has an input system, a feedback system, a detection system, a display, a calculation unit, a storage unit, a communication unit, and the like that are generally used by an electronic device. In some embodiments, a signal triggering and detection process of gesture information detection in a headset control method provided in this application is performed by a detection system of the device. For example, in the detection process, a sensor integrated in the device may be used for detection. It may be understood that, the detection system and the sensor that are on the device connected to the headset have same functions as a detection system and a sensor that are on the headset, but may be considered to be mounted on different bodies due to some commercial and cost reasons.

The following describes a headset control method provided in an embodiment of this application. FIG. 2 shows a headset control method according to an embodiment of this application. The method includes steps 201 to 203. Details are as follows.

201: Detect gesture information.

A headset may detect the gesture information in real time. The gesture information is an ambient signal captured by the headset. Specifically, a detection module of the headset captures the ambient signal around the headset in real time.

Alternatively, the headset periodically detects the gesture information. For example, the headset captures a surrounding ambient signal at a specific interval.

Alternatively, the headset may further detect the gesture information when a preset triggering condition is met. For example, when the preset condition is met, the headset starts to capture the ambient signal.

The preset condition may be that when a Bluetooth module in the headset detects that a Bluetooth RSSI value is less than a preset threshold, the gesture information is triggered to be detected.

Alternatively, when it is detected that a user raises a hand, for example, detection is performed by using an IMU module in a watch. Certainly, another triggering manner may also be used. For example, if a proximity sensor is used to detect that an object approaches the headset, or a light sensor detects that a light intensity is lower than a threshold, the headset is triggered to capture the ambient signal in real time, for example, turn on a microphone to capture audio. This is not specifically limited in this solution.

When the preset condition is met, the headset is triggered to detect the gesture information, so that power consumption of the headset can be reduced.

202: Determine, based on the gesture information, a gesture executed by the user, where the gesture information is the ambient signal captured by the headset, and the gesture includes either of ear covering that forms a cavity around the headset and listening that forms an open reflective surface around the headset.

The ambient signal may be, for example, one or more of signals such as an audio signal, a Bluetooth signal, an optical signal, and an ultrasonic signal.

The audio signal may be detected by the detection module of the headset, for example, may be an audio signal captured by using the microphone for a period of time. Alternatively, the audio signal may be an audio signal captured after triggering in another manner. This is not specifically limited in this solution.

The Bluetooth signal may be a Bluetooth signal captured by using a Bluetooth module or the like.

A feature of the captured ambient signal is extracted, and the gesture executed by the user is determined based on the extracted feature.

A purpose of feature extraction is to detect whether the captured audio signal, Bluetooth signal, optical signal, ultrasonic signal, or the like meets a signal feature of ear covering of the user, or meets a signal feature of listening of the user, to trigger a corresponding operation subsequently.

For example, the calculation module of the headset determines, based on the gesture information, the gesture executed by the user, and then indicates the noise reduction control module to switch a mode of the headset.

In this solution, ear covering may be understood as that the user uses a hand to form a cavity near the headset. The cavity may be fully enclosed, as shown in FIG. 1b.

In this solution, listening may be understood as an action that the user uses a hand to form an open reflective surface around the headset. In this solution, the action of using the hand to form the open reflective surface around the headset is defined as an operation of listening. Refer to FIG. 1c.

203: Adjust the mode of the headset to a target mode based on the gesture executed by the user.

For example, when it is detected that the user performs the gesture of ear covering, the headset is triggered to enter a noise reduction enabled mode. Alternatively, when the gesture executed by the user is ear covering, the target mode is a noise reduction transparent transmission disabled mode (common mode).

Specifically, a dedicated noise reduction circuit or an audio processing module in the headset is started to perform noise reduction processing on subsequent audio captured from the microphone.

When it is detected that the user performs the gesture of listening, the headset is triggered to enter a transparent transmission enabled mode.

The foregoing uses only one implementation as an example for description, and the implementation may further correspond to another control mode. This is not specifically limited in this solution.

In another optional implementation, after the gesture executed by the user is determined, internal processing of the headset triggered by the gesture of ear covering may be further changed based on a current status of the headset.

Specifically, when the gesture executed by the user is ear covering, if a current mode of the headset is a noise reduction transparent transmission disabled mode, the target mode is a noise reduction enabled mode.

Alternatively, when a current mode of the headset is a noise reduction enabled mode, the target mode is a transparent transmission enabled mode.

Alternatively, when a current mode of the headset is a transparent transmission enabled mode, the target mode is a noise reduction transparent transmission disabled mode.

For example, if the current mode is already a noise reduction mode, when the operation of ear covering is detected, the current mode is switched to a non-noise reduction mode.

In still another optional implementation, noise reduction degrees may be further classified into levels. If a current environment of the user is a scenario with low noise, such as a library, a bookstore, or an office, and it is detected that the user performs the operation of ear covering, a light noise reduction mode is enabled. If a current environment of the user is a scenario with moderate noise such as a cafe or a subway, and it is detected that the user performs the operation of ear covering, an equalization noise reduction mode is enabled. If a current environment of the user is a scenario with high noise such as a restaurant or an airport, and it is detected that the user performs the operation of ear covering, a deep noise reduction mode is enabled, or the like.

Based on the foregoing embodiment, mode control may be further performed through combination. For example, the solution of performing level classification based on the noise reduction degree may be combined with a current status of the headset, and a headset operation specifically triggered by the operation of ear covering is determined by using the ear covering action and a noise reduction level currently used by the headset.

For example, when the current status of the headset is light noise reduction, ear covering enables moderate noise reduction; or when the current status of the headset is medium noise reduction, ear covering enables heavy noise reduction.

In addition to controlling the headset mode based on the scenario, the noise reduction degree may be changed based on duration of ear covering. For example, if the user keeps covering, the noise reduction degree increases level by level. Specifically, the noise reduction degree may be fed back by using a sound of a feedback module in the headset. Specifically, when it is detected that the user just performs ear covering, the headset is dripped once. When it is continuously detected that the user does not release the hand, the noise reduction level is increased, and the headset is dripped once again, or the dripped sound changes. The foregoing is merely an example, and this is not specifically limited in this solution.

Alternatively, the headset mode or the like corresponding to the operation of ear covering may be further determined based on preset setting of the user. This is not specifically limited in this solution.

In this embodiment, different headset modes are triggered to be switched by the user gesture operation, so that multi-mode and status switching can be implemented based on one action, which has strong user operability, is more intelligent, and has a user-friendly interaction interface.

In this embodiment of this application, the gesture executed by the user is determined based on the ambient signal captured by the headset, to adjust the mode of the headset to the target mode. According to this means, the operation of ear covering is natural, is more user-friendly, and is simpler to operate. In addition, the user does not need to learn too much, and no additional new hardware needs to be added, thereby implementing headset control and improving user experience.

The following describes in detail specific implementation of this application.

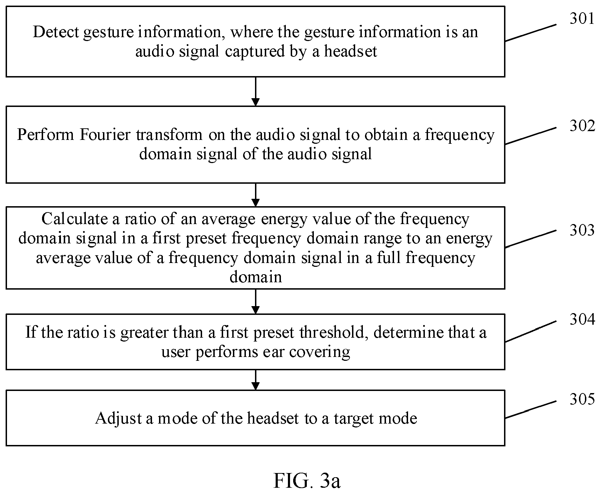

FIG. 3a is a schematic flowchart of a first headset control method according to an embodiment of this application. The method includes step 301 to step 305. Details are as follows.

301: Detect gesture information, where the gesture information is an audio signal captured by a headset.

In an implementation, the audio signal around the headset is captured by using an external microphone of the headset. The audio signal may be an audio signal of a period of time, for example, duration of 30s.

Specific duration may be determined based on a calculation accuracy requirement and a processing capability requirement of the headset. This is not specifically limited in this solution.

302: Perform Fourier transform on the audio signal to obtain a frequency domain signal of the audio signal.

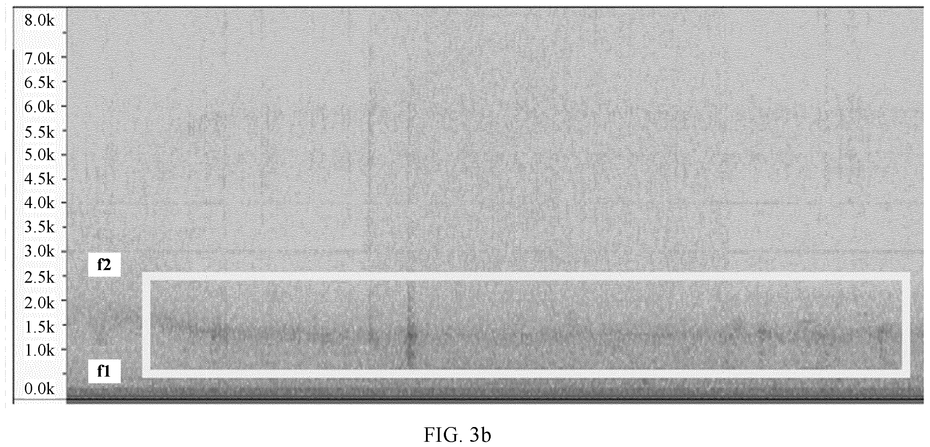

Specifically, Fourier transform is performed on the captured audio signal, and a received time domain audio signal may be transformed into the frequency domain signal. Frequency energy distribution of the frequency domain signal may be shown in FIG. 3b. A horizontal axis represents time, a vertical axis represents a frequency range, and points in the figure represent energy of the signal.

303: Calculate a ratio of an average energy value of the frequency domain signal in a first preset frequency domain range to an energy average value of a frequency domain signal in a full frequency domain.

The frequency domain signal in the first preset frequency domain range may be centralized in a frequency band range. For example, in FIG. 3b, there is a ratio of an average energy value in a range from f1 to f2 in frequency domain to the energy average value in the full frequency domain.

304: If the ratio is greater than a first preset threshold, determine that the user performs ear covering.

The first preset threshold may be any value. This is not specifically limited in this solution.

It is found through an experiment that because there is a phenomenon that energy of an ambient sound is concentrated on a feature frequency band due to a cavity formed by a hand and an ear, it may be detected, based on the audio feature, that the user performs the operation of ear covering.

Further, if the ratio is less than a second preset threshold, it is determined that the user performs listening, where the second preset threshold is less than the first preset threshold.

Certainly, if the ratio may be greater than a third preset threshold or less than the second preset threshold, it is determined that the user performs listening and the like, where the second preset threshold is less than the first preset threshold. This is not specifically limited in this solution.

305: Adjust a mode of the headset to a target mode.

For example, when it is detected that the user performs the gesture of ear covering, the headset is triggered to enter a noise reduction mode. Specifically, a dedicated noise reduction circuit or an audio processing module in the headset is started to perform noise reduction processing on subsequent audio captured from the microphone.

When it is detected that the user performs the gesture of listening, the headset is triggered to enter a transparent transmission mode.

Further, after the gesture executed by the user is determined, internal processing of the headset triggered by the gesture of ear covering may be further changed based on a current status of the headset. For example, if the current mode is already a noise reduction mode, when the operation of ear covering is detected, the current mode is switched to a non-noise reduction mode.

In this embodiment, based on the phenomenon that energy of the ambient sound is concentrated on the feature frequency band due to the cavity formed by the hand and the ear, it is determined that the user performs ear covering.

In this embodiment of this application, the gesture executed by the user is determined based on energy information of the frequency domain signal of the audio signal captured by the headset, to adjust the mode of the headset to the target mode. According to this means, the operation of ear covering is natural, is more user-friendly, and is simpler to operate. In addition, the user does not need to learn too much, and no additional new hardware needs to be added, thereby implementing headset control and improving user experience.

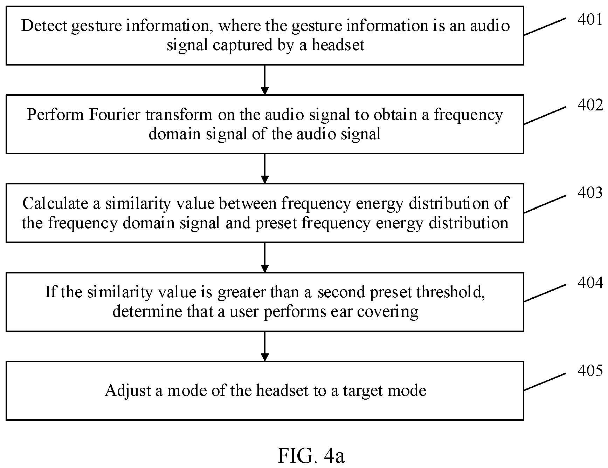

FIG. 4a is a schematic flowchart of a second headset control method according to an embodiment of this application. The method includes step 401 to step 405. Details are as follows.

401: Detect gesture information, where the gesture information is an audio signal captured by a headset.

In an implementation, the audio signal around the headset is captured by using an external microphone of the headset. The audio signal may be an audio signal of a period of time, for example, duration of 30s.

Specific duration may be determined based on a calculation accuracy requirement and a processing capability requirement of the headset. This is not specifically limited in this solution.

402: Perform Fourier transform on the audio signal to obtain a frequency domain signal of the audio signal.

Specifically, Fourier transform is performed on the captured audio signal, and a received time domain audio signal may be transformed into the frequency domain signal. For details, refer to the descriptions of the foregoing embodiment. Details are not described herein.

403: Calculate a similarity value between frequency energy distribution of the frequency domain signal and preset frequency energy distribution.

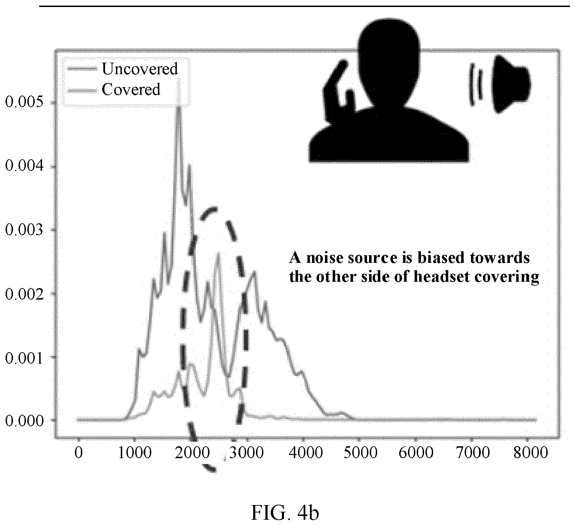

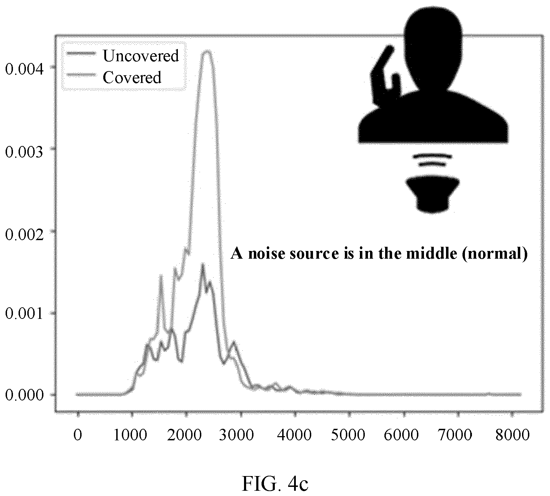

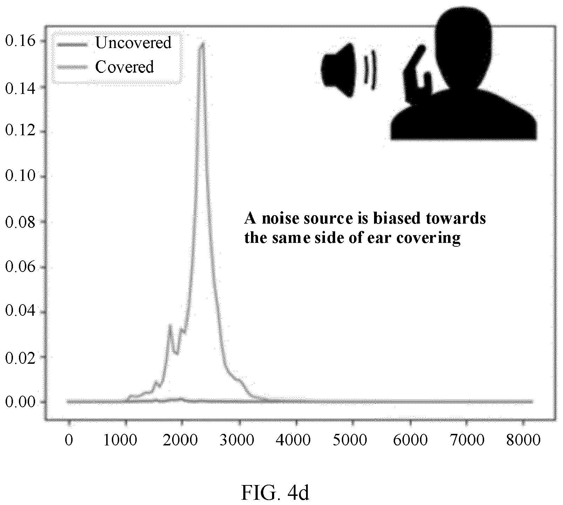

The frequency energy distribution of the frequency domain signal may be, for example, a frequency energy curve. As shown in each of FIG. 4b, FIG. 4c, and FIG. 4d, a horizontal axis represents a frequency, and a vertical axis represents energy on a frequency. FIG. 4b shows a frequency energy curve when a noise source is biased towards the other side of ear covering. FIG. 4c shows a frequency energy curve when a noise source is in the middle of a position of the user. FIG. 4d shows a frequency energy curve when a noise source is biased towards the side of ear covering.

The preset frequency energy distribution may be frequency energy distribution corresponding to the gesture of ear covering obtained through learning.

404: If the similarity value is greater than a second preset threshold, determine that the user performs ear covering.

It is found through a plurality of experiments that when the user performs ear covering, large wave peaks appear in frequency energy curves brought by noise sources in different directions. Therefore, a frequency energy curve of a detected audio signal may be matched with a pre-learned or preset curve. When a similarity is greater than a threshold, it is determined that the user performs ear covering.

405: Adjust a mode of the headset to a target mode.

For example, when it is detected that the user performs the gesture of ear covering, the headset is triggered to enter a noise reduction mode.

When it is detected that the user performs the gesture of listening, the headset is triggered to enter a transparent transmission mode.

Further, after the gesture executed by the user is determined, internal processing of the headset triggered by the gesture of ear covering may be further changed based on a current status of the headset. For example, if the current mode is already a noise reduction mode, when the operation of ear covering is detected, the current mode is switched to a non-noise reduction mode and the like.

In this embodiment of this application, the gesture executed by the user is determined based on a similarity value between frequency energy distribution of a frequency domain signal obtained based on an audio signal around the headset and preset frequency energy distribution, to adjust the mode of the headset to the target mode. According to this means, the operation of ear covering is natural, is more user-friendly, and is simpler to operate. In addition, the user does not need to learn too much, and no additional new hardware needs to be added, thereby implementing headset control and improving user experience.

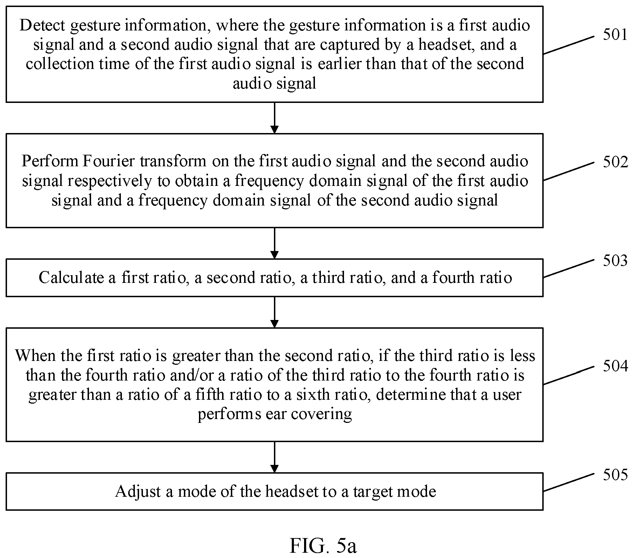

The foregoing embodiment is described by using one segment of audio signal as an example. The following describes how to implement headset control based on two segments of audio signals. FIG. 5a is a schematic flowchart of a third headset control method according to an embodiment of this application. The method includes step 501 to step 505. Details are as follows.

501: Detect gesture information, where the gesture information is a first audio signal and a second audio signal that are captured by a headset, and a capturing time of the first audio signal is earlier than that of the second audio signal.

For example, the two segments of audio signals around the headset are separately captured at a specific interval.

The foregoing two audio signals may also be captured in two consecutive periods of time. This is not specifically limited in this solution.

502: Perform Fourier transform on the first audio signal and the second audio signal respectively to obtain a frequency domain signal of the first audio signal and a frequency domain signal of the second audio signal.

For the Fourier transform, refer to the descriptions of the foregoing embodiment. Details are not described herein again.

503: Calculate a first ratio of an average energy value of the frequency domain signal of the second audio signal in a second preset frequency domain range to an energy average value of a frequency domain signal in a full frequency domain, a second ratio of an average energy value of the frequency domain signal of the first audio signal in the second preset frequency domain range to the energy average value of the frequency domain signal in the full frequency domain, a third ratio of an average energy value of the frequency domain signal of the second audio signal in a third preset frequency domain range to the energy average value of the frequency domain signal in the full frequency domain, and a fourth ratio of an average energy value of the frequency domain signal of the second audio signal in a fourth preset frequency domain range to the energy average value of the frequency domain signal in the full frequency domain, where a frequency in the second preset frequency domain range is lower than a frequency in the fourth preset frequency domain range, and a frequency in the third preset frequency domain range is higher than the frequency in the fourth preset frequency domain range.

504: When the first ratio is greater than the second ratio, if the third ratio is less than the fourth ratio and/or a ratio of the third ratio to the fourth ratio is greater than a ratio of a fifth ratio to a sixth ratio, determine that the user performs ear covering, where the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain.

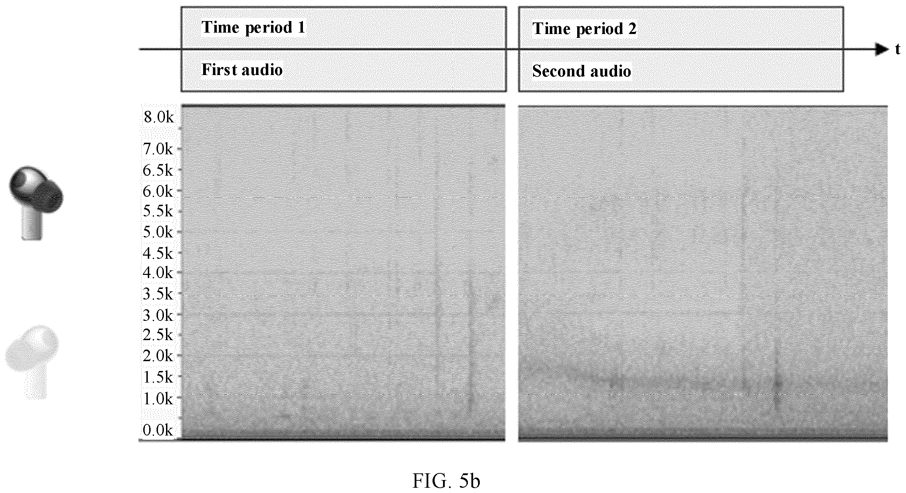

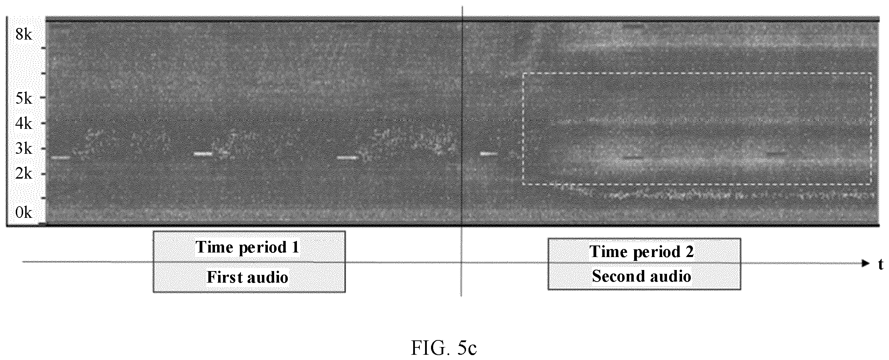

As shown in FIG. 5b, low-frequency energy changes of the two segments of audio signals before and after ear covering are compared. As shown in FIG. 5c, high-frequency energy changes of the two segments of audio signals before and after ear covering are compared. First audio corresponding to a time period 1 is audio before ear covering, and second audio corresponding to a time period 2 is audio after ear covering. Energy distribution of the frequency domain signals of the two audio signals is compared. Relative to a first segment of audio signal whose capturing time is earlier, when frequency energy of a second segment of audio signal whose capturing time is later is aggregated in a low-frequency range (as shown in FIG. 5b) and energy in a high-frequency range suddenly decreases (as shown in FIG. 5c), it is determined that the user performs the operation of ear covering.

505: Adjust a mode of the headset to a target mode.

For example, when it is detected that the user performs the gesture of ear covering, the headset is triggered to enter a noise reduction mode.

When it is detected that the user performs the gesture of listening, the headset is triggered to enter a transparent transmission mode.

Further, after the gesture executed by the user is determined, internal processing of the headset triggered by the gesture of ear covering may be further changed based on a current status of the headset. For example, if the current mode is already a noise reduction mode, when the operation of ear covering is detected, the current mode is switched to a non-noise reduction mode.

The foregoing description is provided by using an example in which the user performs ear covering.

If a ratio of an average energy value of the frequency domain signal of a frequency domain signal of at least one segment of audio signal in the frequency domain signal of the first audio signal and the frequency domain signal of the second audio signal in an eighth preset frequency domain range to the average energy value of the frequency domain signal of the full frequency domain is greater than a third preset threshold and a ratio of an average energy value of the frequency domain signal of at least one segment of audio signal in the frequency domain signal of the first audio signal and the frequency domain signal of the second audio signal in a ninth preset frequency domain range to the average energy value of the frequency domain signal of the full frequency domain is also greater than the third preset threshold, it is determined that the user performs listening.

In other words, if audio signals in the foregoing two segments of audio signals are enhanced at high frequencies and are also enhanced at low frequencies, it is determined that the user performs listening.

Correspondingly, the mode of the headset may be adjusted to the target mode based on the gesture of listening performed by the user.

In this embodiment, comparing uniform energy distribution before ear covering with energy distribution after ear covering, energy after ear covering is concentrated in a low-frequency area, and energy at a high frequency suddenly decrease, to determine the user gesture based on this feature.

In this embodiment of this application, the gesture executed by the user is determined based on frequency energy distribution of frequency domain signals obtained based on two audio signals that are around the headset and that are at different times, to adjust the mode of the headset to the target mode. According to this means, the operation of ear covering is natural, is more user-friendly, and is simpler to operate. In addition, the user does not need to learn too much, and no additional new hardware needs to be added, thereby implementing headset control and improving user experience.

In addition, in this solution, the user operation is determined by using a difference between two segments of audio at different times. It is unnecessary to perform determining by setting an additional parameter, thereby avoiding some misjudgments caused by improper parameter setting, and improving reliability of headset control.

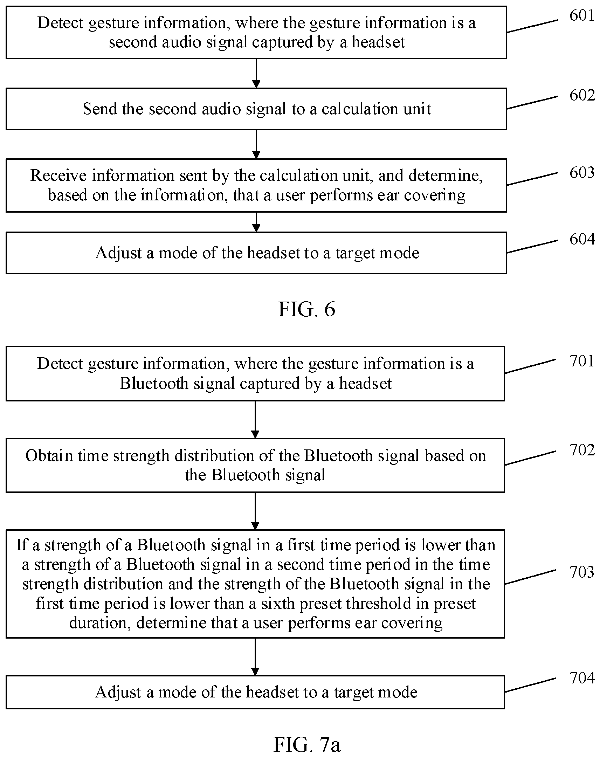

FIG. 6 is a schematic flowchart of a fourth headset control method according to an embodiment of this application. In this solution, a headset is controlled based on two segments of audio signals of two earphones. The method includes step 601 to step 604. Details are as follows.

601: Detect gesture information, where the gesture information is a second audio signal captured by a headset.

602: Send the second audio signal to a calculation unit, so that the calculation unit performs Fourier transform on a first audio signal and the second audio signal respectively to obtain a frequency domain signal of the first audio signal and a frequency domain signal of the second audio signal, where the first audio signal and the second audio signal are captured by different earphones.

The first audio signal and the second audio signal may be captured in a same time period. This is not specifically limited in this solution.

The calculation unit may be located in a device such as a mobile phone connected to the headset, or may be located in the other earphone connected to the earphone.

Optionally, the first audio signal is captured by the left earphone, and the second audio signal is captured by the right earphone.

603: Receive information sent by the calculation unit, and determine, based on the information, that the user performs ear covering, where the information indicates that a first ratio is greater than a second ratio and a third ratio is less than a fourth ratio, and/or a ratio of the third ratio to the fourth ratio is greater than a ratio of a fifth ratio to a sixth ratio, the first ratio is a ratio of an average energy value of the frequency domain signal of the second audio signal in a second preset frequency domain range to an average energy value of a frequency domain signal of a full frequency domain, the second ratio is a ratio of an average energy value of the frequency domain signal of the first audio signal in the second preset frequency domain range to the average energy value of the frequency domain signal of the full frequency domain, the third ratio is a ratio of an average energy value of the frequency domain signal of the second audio signal in a third preset frequency domain range to the average energy value of the frequency domain signal of the full frequency domain, the fourth ratio is a ratio of an average energy value of the frequency domain signal of the second audio signal in a fourth preset frequency domain range to the average energy value of the frequency domain signal of the full frequency domain, the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain, a frequency in the second preset frequency domain range is lower than a frequency in the fourth preset frequency domain range, and a frequency in the third preset frequency domain range is higher than the frequency in the fourth preset frequency domain range.

Frequency energy distribution of the obtained two segments of audio signals is compared. Relative to the other segment of audio signal, when frequency energy of one segment of audio signal is aggregated in a low frequency range and suddenly decreases in a high frequency range, it is determined that the user performs the operation of ear covering.

Further, which ear is covered by the user may be further determined based on the frequency energy distribution, so that the ear covered by the user may be determined based on the frequency energy distribution, and different noise reduction operations are performed on the left and right earphones.

604: Adjust a mode of the headset to a target mode.

For example, when it is detected that the user performs the gesture of ear covering, the headset is triggered to enter a noise reduction mode.

When it is detected that the user performs the gesture of listening, the headset is triggered to enter a transparent transmission mode.

Further, after the gesture executed by the user is determined, internal processing of the headset triggered by the gesture of ear covering may be further changed based on a current status of the headset. For example, if the current mode is already a noise reduction mode, when the operation of ear covering is detected, the current mode is switched to a non-noise reduction mode.

If a ratio of an average energy value of the frequency domain signal of the first audio signal in a fifth preset frequency domain range to the average energy value of the frequency domain signal of the full frequency domain and a ratio of an average energy value of the frequency domain signal of the second audio signal in the fifth preset frequency domain range to the average energy value of the frequency domain signal of the full frequency domain each are not greater than a third preset threshold or a ratio of an average energy value of the frequency domain signal of the first audio signal in a sixth preset frequency domain range to the average energy value of the frequency domain signal of the full frequency domain and a ratio of an average energy value of the frequency domain signal of the second audio signal in the sixth preset frequency domain range to the average energy value of the frequency domain signal of the full frequency domain are respectively greater than a ratio of an average energy value of the frequency domain signal of the first audio signal in a seventh preset frequency domain range to the average energy value of the frequency domain signal of the full frequency domain and a ratio of an average energy value of the frequency domain signal of the second audio signal in the seventh preset frequency domain range to the average energy value of the frequency domain signal of the full frequency domain, a Bluetooth signal of the headset is obtained, and time strength distribution of the Bluetooth signal is obtained.

If a strength of a Bluetooth signal in a first time period is lower than a strength of a Bluetooth signal in a second time period and the strength of the Bluetooth signal in the first time period is lower than a fourth preset threshold in preset duration, it is determined that the user performs ear covering, where the second time period is earlier than the first time period.

In other words, when it cannot be determined, based on the audio signal, that the user performs ear covering, auxiliary determining may be performed based on the Bluetooth signal. Certainly, a photosensitive sensor, a proximity sensor, or the like may also be used. This is not specifically limited in this solution.

The foregoing description is provided by using an example in which the user performs ear covering.

If a ratio of an average energy value of the frequency domain signal of the second audio signal in an eighth preset frequency domain range to the average energy value of the frequency domain signal of the full frequency domain is greater than the fourth preset threshold and a ratio of an average energy value of the frequency domain signal of the second audio signal in a ninth preset frequency domain range to the average energy value of the frequency domain signal of the full frequency domain is also greater than the fourth preset threshold, it is determined that the user performs listening.

Correspondingly, the mode of the headset may be adjusted to the target mode based on the gesture of listening performed by the user.

In this embodiment of this application, the gesture executed by the user is determined based on frequency energy distribution of frequency domain signals obtained based on audio signals around the two earphones, to adjust the mode of the headset to the target mode. According to this means, the operation of ear covering is natural, is more user-friendly, and is simpler to operate. In addition, the user does not need to learn too much, and no additional new hardware needs to be added, to identify the operation of the user, thereby implementing headset control and improving user experience.

In addition, it is unnecessary to perform determining by setting an additional parameter in this solution, thereby avoiding some misjudgments caused by improper parameter setting, and improving reliability of headset control.

FIG. 7a is a schematic flowchart of a fifth headset control method according to an embodiment of this application. The method includes step 701 to step 704. Details are as follows.

701: Detect gesture information, where the gesture information is a Bluetooth signal captured by a headset.

The Bluetooth signal may be in a period of time.

702: Obtain time strength distribution of the Bluetooth signal based on the Bluetooth signal.

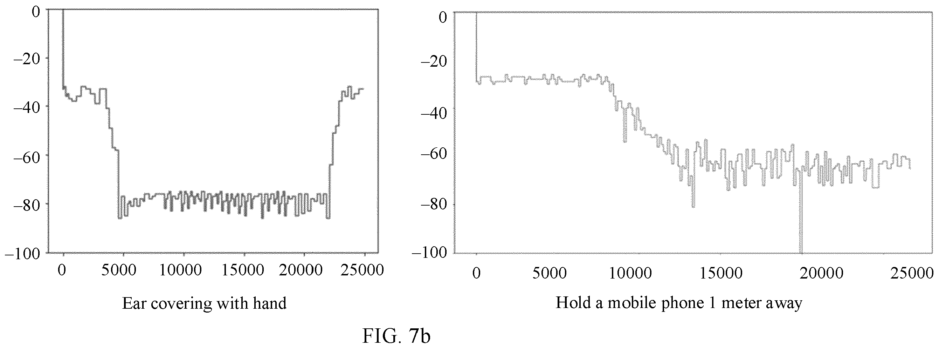

In a time strength curve shown in FIG. 7b, horizontal coordinate data is time, and a vertical coordinate is a received signal strength indicator (Received Signal Strength Indication, RSSI). A value of the received signal strength indicator RSSI is a negative value, and a decrease of the RSSI value represents signal weakening. When a user uses a hand to cover an ear (a Bluetooth headset), compared with a Bluetooth wireless signal in a case in which a communication device is held away, the Bluetooth signal is weakened more quickly because of ear covering, and the RSSI value is reduced more. Although the RSSI also decreases when a mobile phone and the headset are away from each other, the RSSI decreases slowly and the RSSI fluctuates with a distance and does not suddenly decrease below a threshold.

703: If a strength of a Bluetooth signal in a first time period is lower than a strength of a Bluetooth signal in a second time period in the time strength distribution and the strength of the Bluetooth signal in the first time period is lower than a sixth preset threshold in preset duration, it is determined that the user performs ear covering, where the second time period is earlier than the first time period.

When RSSI strength of the Bluetooth signal suddenly decreases to a threshold and keeps a specific time period, it is determined that the user performs ear covering.

704: Adjust a mode of the headset to a target mode.

For example, when it is detected that the user performs the gesture of ear covering, the headset is triggered to enter a noise reduction mode. Specifically, a dedicated noise reduction circuit or an audio processing module in the headset is started to perform noise reduction processing on subsequent audio captured from the microphone.

When it is detected that the user performs the gesture of listening, the headset is triggered to enter a transparent transmission mode.

Further, after the gesture executed by the user is determined, internal processing of the headset triggered by the gesture of ear covering may be further changed based on a current status of the headset. For example, if the current mode is already a noise reduction mode, when the operation of ear covering is detected, the current mode is switched to a non-noise reduction mode.

In this embodiment of this application, the gesture executed by the user is determined based on the Bluetooth signal around the headset, to adjust the mode of the headset to the target mode. According to this means, the operation of ear covering is natural, is more user-friendly, and is simpler to operate. In addition, the user does not need to learn too much, and no additional new hardware needs to be added, to identify the operation of the user, thereby implementing headset control and improving user experience.

The foregoing embodiment is described by using the audio signal and the Bluetooth signal as an example. The gesture of the user may be further determined by using a photosensitive sensor, a camera, a proximity sensor (infrared, ultrasonic, or capacitive), or the like to detect whether there is a light block or the like. This is not specifically limited in this solution.

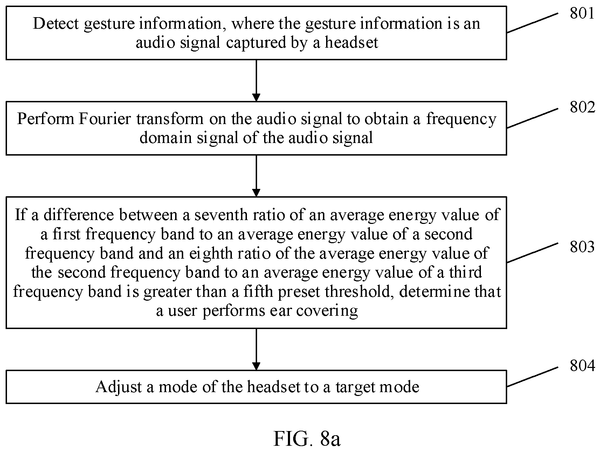

When the headset is covered by a hat, clothes, or the like, or when noise in an environment in which the user is currently located is high, based on the foregoing embodiment, some noise may be incorrectly identified as that the user performs the gesture of ear covering or listening, or the like. For example, when the user wears the hat that covers the ear and is in the scenario with high noise, if a vehicle quickly passes by the user, a change of noise energy caused by the vehicle is identified as that the user performs the operation ear covering. Therefore, FIG. 8a is a schematic flowchart of a sixth headset control method according to an embodiment of this application. The method includes step 801 to step 804. Details are as follows.

801: Detect gesture information, where the gesture information is an audio signal captured by a headset.

802: Perform Fourier transform on the audio signal to obtain a frequency domain signal of the audio signal.

803: If a frequency domain of the frequency domain signal includes at least a first frequency band, a second frequency band, and a third frequency band, a last frequency of the first frequency band is a 1^{st} frequency of the second frequency band, a last frequency of the second frequency band is a 1^{st} frequency of the third frequency band, and a difference between a seventh ratio of an average energy value of the first frequency band to an average energy value of the second frequency band and an eighth ratio of the average energy value of the second frequency band to an average energy value of the third frequency band is greater than a fifth preset threshold, it is determined that the user performs ear covering.

It is determined, based on a ratio of energy of three consecutive frequency domain signals, that the user performs ear covering in a scenario with high noise and external object covering.

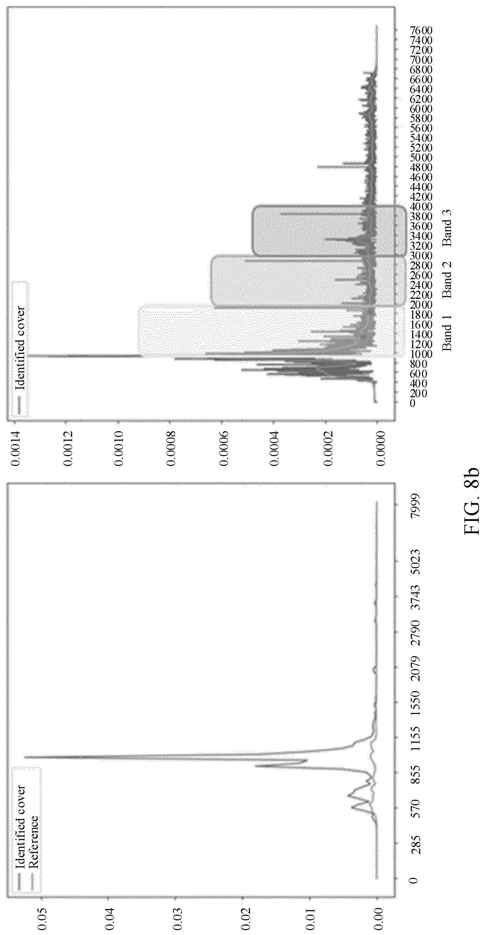

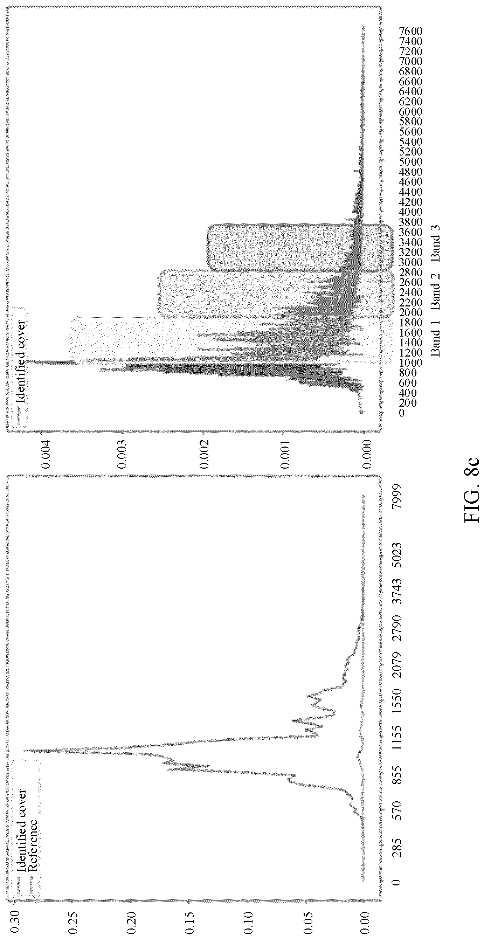

FIG. 8b is a schematic diagram of energy of different frequency bands in which the user performs the operation of ear covering. FIG. 8c is a schematic diagram of energy of different frequency bands corresponding to a case in which a user's ear is covered and ambient noise is high. It is determined, based on a difference between the ratios of energy of three consecutive frequency bands, that ear covering is performed.

The foregoing uses an implementation as an example for description. It may also be determined that the user performs ear covering if an energy peak of the frequency domain signal is in a preset frequency range. This is not specifically limited in this solution.

804: Adjust a mode of the headset to a target mode.

For example, when it is detected that the user performs the gesture of ear covering, the headset is triggered to enter a noise reduction mode.

When it is detected that the user performs the gesture of listening, the headset is triggered to enter a transparent transmission mode.

In this embodiment of this application, in scenarios such as high noise, the gesture executed by the user is determined based on the audio signal around the headset, to adjust the mode of the headset to the target mode. According to this means, detection accuracy in the scenario with high noise and external object covering is further improved.

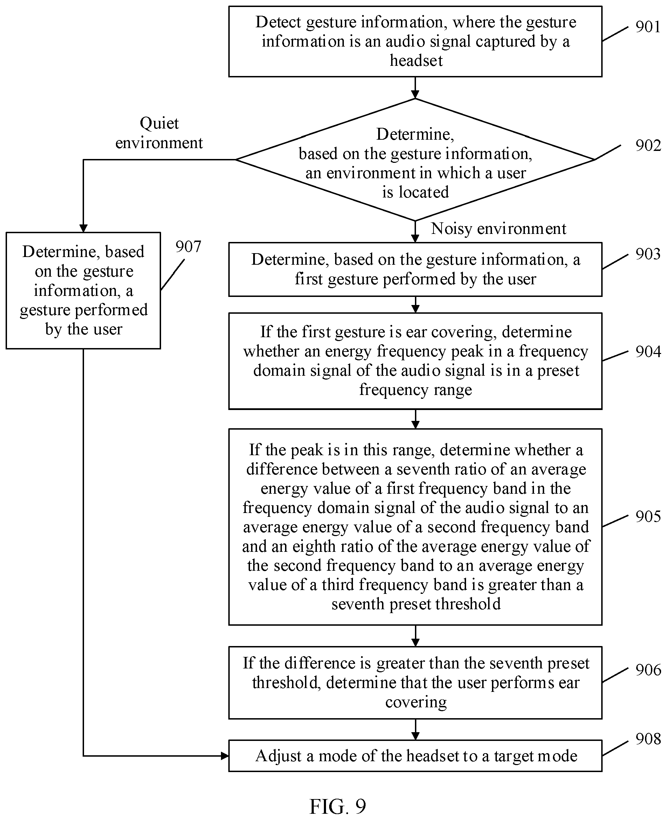

Based on the embodiment shown in FIG. 8a, FIG. 9 is a schematic flowchart of a seventh headset control method according to an embodiment of this application. The method includes step 901 to step 908. Details are as follows.

901: Detect gesture information, where the gesture information is an audio signal captured by a headset.

This embodiment is described by using an example in which an ambient signal captured by the headset is the audio signal.

902: Determine, based on the gesture information, an environment in which a user is located.

903: If the environment is a noisy environment, determine, based on the gesture information, a first gesture performed by the user, where the first gesture includes either of ear covering that forms a cavity around the headset and listening that forms an open reflective surface around the headset.

Whether the environment is the noisy environment may be determined by detecting a ratio of fast Fourier transform (fast Fourier transform, FFT) high-frequency energy. The ratio of FFT high-frequency energy may be understood as, for example, a ratio of energy in a frequency band of 6000 Hz to 12000 Hz to energy in a full frequency band. When the ratio is greater than a threshold, the environment is considered as the noisy environment. Certainly, a specific decibel threshold may alternatively be directly used as a determining basis, or when a total frequency energy value of captured audio signals exceeds a range, it is considered that the scenario is the noisy scenario.

Further, whether the environment is the noisy environment may be further determined by adding an additional sensor. This is not further limited in this step, provided that the environment in which the user is located can be identified.

904: If the first gesture is ear covering, determine whether an energy frequency peak in a frequency domain signal of the audio signal is in a preset frequency range.

The preset frequency range may be between 900 Hz and 1500 Hz. When the peak is not in this range, it is considered that the operation of ear covering of the user is not detected, and the detection ends.

905: If the peak is in this range, determine whether a difference between a seventh ratio of an average energy value of a first frequency band in the frequency domain signal of the audio signal to an average energy value of a second frequency band and an eighth ratio of the average energy value of the second frequency band to an average energy value of a third frequency band is greater than a seventh preset threshold.

The first frequency band, the second frequency band, and the third frequency band are three consecutive frequency band ranges. Specifically, a last frequency of the first frequency band is a 1^{st} frequency of the second frequency band, and a last frequency of the second frequency band is a 1^{st} frequency of the third frequency band.

906: If the difference is greater than the seventh preset threshold, determine that the user performs ear covering.

If it is determined that the user performs ear covering, step 908 is performed.

907: If the environment is a quiet environment, determine, based on the gesture information, a gesture performed by the user, where the gesture includes either of ear covering that forms a cavity around the headset and listening that forms an open reflective surface around the headset.

When the environment in which the user is located is the quiet environment, the gesture executed by the user may be directly determined based on the gesture information and the method in the foregoing embodiment, and step 908 is performed.

908: Adjust a mode of the headset to a target mode.

In other words, in this embodiment of this application, if it is preliminarily determined that the user performs ear covering in the noisy scenario, step 904 and step 905 may be performed for determining, to finally determine the gesture executed by the user.

According to this means, the noisy scenario and the quiet scenario are distinguished, and then different control is performed based on different scenarios, thereby improving accuracy of gesture detection in the noisy scenario.

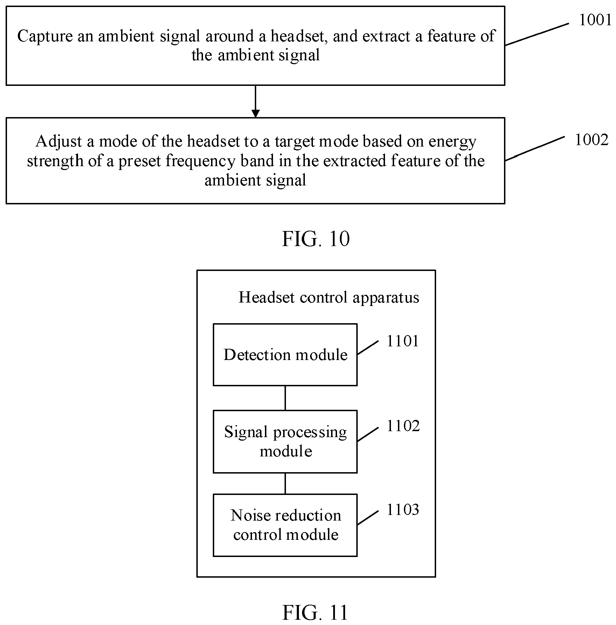

Based on the foregoing interaction embodiment, as shown in FIG. 10, an embodiment of this application further provides a headset control method, including steps 1001 and 1002. Details are as follows.

1001: Capture an ambient signal around a headset, and extract a feature of the ambient signal.

The ambient signal includes at least one of the following: an audio signal, an optical signal, and an ultrasonic signal.

A trigger condition of the foregoing step 1001 may be that when a strength value of a Bluetooth signal of the headset is less than a preset threshold, gesture information is triggered to be detected; or when a preset signal is received, gesture information is triggered to be detected, where the preset signal indicates that a wearable device detects that the user raises a hand. Alternatively, there may be another trigger condition. This is not specifically limited in this solution.

Alternatively, the ambient signal around the headset may be captured in real time or may be periodically captured. This is not specifically limited in this solution.

For the foregoing trigger condition, refer to the description of the embodiment shown in FIG. 2. Details are not described herein again.

When the ambient signal is the audio signal, the capturing the ambient signal around the headset and extracting the feature of the ambient signal may be:
capturing the ambient signal around the headset, and performing Fourier transform on the audio signal to obtain the frequency domain signal of the audio signal.

For the Fourier transform, refer to the descriptions of the foregoing embodiment. Details are not described herein again.

1002: Adjust a mode of the headset to a target mode based on energy strength of a preset frequency band in the extracted feature of the ambient signal.

In an implementation, step 1002 may include:
calculating a ratio of an average energy value of the frequency domain signal in a first preset frequency domain range to an energy average value of a frequency domain signal in a full frequency domain; and
if the ratio is greater than a first preset threshold, determining that the target mode is a first mode.

In other words, energy of the frequency domain signal in the first preset frequency domain range in the frequency domain signal is compared with energy of the full frequency band, to adjust the mode of the headset based on the comparison result.

The first mode may be a noise reduction enabled mode, a noise reduction transparent transmission disabled mode, or the like. Certainly, there may be another mode. This is not specifically limited in this solution.

Further, if the ratio is less than a preset threshold A, the target mode is a second mode, and the preset threshold A is less than the first preset threshold.

The second mode may be a transparent transmission enabled mode. Certainly, there may be another mode. This is not specifically limited in this solution.

For descriptions of this implementation, refer to the embodiment in FIG. 3a. Details are not described herein again.

Further, adjustment control may be further performed based on a current mode of the headset. For example, when the current mode of the headset is a noise reduction transparent transmission disabled mode, the first mode is a noise reduction enabled mode; when the current mode of the headset is a noise reduction enabled mode, the first mode is a transparent transmission enabled mode; or when the current mode of the headset is a transparent transmission enabled mode, the first mode is a noise reduction transparent transmission disabled mode. Alternatively, there may be another control policy. This is not specifically limited in this solution.

In an implementation, step 1002 may include:
calculating a similarity value between frequency energy distribution of the frequency domain signal and preset frequency energy distribution; and
if the similarity value is greater than a second preset threshold, determining that the target mode is a first mode.

A frequency energy curve of the frequency domain signal is compared with a preset frequency energy curve, to control the mode of the headset.

For descriptions of this implementation, refer to the embodiment shown in FIG. 4a. Details are not described herein again.

In another implementation, when the ambient signal includes a first audio signal and a second audio signal, and a capturing time of the first audio signal is earlier than a capturing time of the second audio signal, the extracting a feature of the ambient signal includes:
performing Fourier transform on the first audio signal and the second audio signal respectively to obtain a frequency domain signal of the first audio signal and a frequency domain signal of the second audio signal, and
calculating a first ratio of an average energy value of the frequency domain signal of the second audio signal in a second preset frequency domain range to an energy average value of a frequency domain signal in a full frequency domain, a second ratio of an average energy value of the frequency domain signal of the first audio signal in the second preset frequency domain range to the energy average value of the frequency domain signal in the full frequency domain, a third ratio of an average energy value of the frequency domain signal of the second audio signal in a third preset frequency domain range to the energy average value of the frequency domain signal in the full frequency domain, and a fourth ratio of an average energy value of the frequency domain signal of the second audio signal in a fourth preset frequency domain range to the energy average value of the frequency domain signal in the full frequency domain, where a frequency in the second preset frequency domain range is lower than a frequency in the fourth preset frequency domain range, and a frequency in the third preset frequency domain range is higher than the frequency in the fourth preset frequency domain range.

The step 1002 includes:
when the first ratio is greater than the second ratio, if the third ratio is less than the fourth ratio and/or a ratio of the third ratio to the fourth ratio is greater than a ratio of a fifth ratio to a sixth ratio, determining that the target mode is a first mode, where the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain.

The step 1002 further includes: if a ratio of an average energy value of a frequency domain signal of at least one segment of audio signal in the frequency domain signal of the first audio signal and the frequency domain signal of the second audio signal in an eighth preset frequency domain range to the average energy value of the frequency domain signal of the full frequency domain is greater than a sixth preset threshold and a ratio of an average energy value of the frequency domain signal of at least one segment of audio signal in the frequency domain signal of the first audio signal and the frequency domain signal of the second audio signal in a ninth preset frequency domain range to the average energy value of the frequency domain signal of the full frequency domain is also greater than the sixth preset threshold, determining that the target mode is a second mode.

For descriptions of this implementation, refer to the embodiment shown in FIG. 5a. Details are not described herein again.

When the headset is covered by a hat, clothes, or the like, or when noise in an environment in which the user is currently located is high, based on the foregoing embodiment, some noise may be incorrectly identified as that the user performs the gesture of ear covering or listening, or the like. For example, when the user wears the hat that covers the ear and is in the scenario with high noise, if a vehicle quickly passes by the user, a change of noise energy caused by the vehicle is identified as that the user performs the operation ear covering. Based on this, in this solution, based on the foregoing embodiment, it is further determined that the target mode is the first mode if an energy peak of the frequency domain signal is in a preset frequency range.

Further, based on the foregoing embodiment, if a frequency domain of the audio signal includes at least a first frequency band, a second frequency band, and a third frequency band, a last frequency of the first frequency band is a 1^{st} frequency of the second frequency band, a last frequency of the second frequency band is a 1^{st} frequency of the third frequency band, and a difference between a seventh ratio of an average energy value of the first frequency band to an average energy value of the second frequency band and an eighth ratio of the average energy value of the second frequency band to an average energy value of the third frequency band is greater than a seventh preset threshold, it is determined that the target mode is a first mode.

For descriptions of this embodiment, refer to the description of the embodiment shown in FIG. 8a. Details are not described herein again.

In this embodiment of this application, the feature of the ambient signal around the headset is extracted, and then the mode of the headset is adjusted to the target mode based on energy strength of the preset frequency band in the extracted feature of the ambient signal. According to this means, the operation of ear covering is natural, is more user-friendly, and is simpler to operate. In addition, the user does not need to learn too much, and no additional new hardware needs to be added, to identify the operation of the user, thereby implementing headset control and improving user experience.

FIG. 11 is a schematic diagram of a headset control apparatus according to an embodiment of this application. As shown in FIG. 11, the apparatus includes a detection module 1101, a signal processing module 1102, and a noise reduction control module 1103.

The detection module 1101 is configured to detect gesture information.

The signal processing module 1102 is configured to determine, based on the gesture information, a gesture executed by a user, where the gesture information is an ambient signal captured by a headset, and the gesture includes either of ear covering that forms a cavity around the headset and listening that forms an open reflective surface around the headset.

Th noise reduction control module 1103 is configured to adjust a mode of the headset to a target mode based on the gesture executed by the user.

The ambient signal includes at least one of the following: an audio signal, a Bluetooth signal, an optical signal, and an ultrasonic signal.

When the ambient signal is a segment of audio signal, the signal processing module 1102 is configured to:
perform Fourier transform on the audio signal to obtain a frequency domain signal of the audio signal;
calculate a ratio of an average energy value of the frequency domain signal in a first preset frequency domain range to an energy average value of a frequency domain signal in a full frequency domain; and
if the ratio is greater than a first preset threshold, determine that the user performs ear covering.

The signal processing module 1102 is configured to:
if the ratio is less than a second preset threshold, determine that the user performs listening, where the second preset threshold is less than the first preset threshold.

When the ambient signal is a segment of audio signal, the signal processing module 1102 is configured to:
perform Fourier transform on the audio signal to obtain a frequency domain signal of the audio signal;
calculate a similarity value between frequency energy distribution of the frequency domain signal and preset frequency energy distribution; and
if the similarity value is greater than a second preset threshold, determine that the user performs ear covering.

When the ambient signal includes a first audio signal and a second audio signal, and a capturing time of the first audio signal is earlier than a capturing time of the second audio signal, the signal processing module 1102 is configured to:
perform Fourier transform on the first audio signal and the second audio signal respectively to obtain a frequency domain signal of the first audio signal and a frequency domain signal of the second audio signal;
calculate a first ratio of an average energy value of the frequency domain signal of the second audio signal in a second preset frequency domain range to an energy average value of a frequency domain signal in a full frequency domain, a second ratio of an average energy value of the frequency domain signal of the first audio signal in the second preset frequency domain range to the energy average value of the frequency domain signal in the full frequency domain, a third ratio of an average energy value of the frequency domain signal of the second audio signal in a third preset frequency domain range to the energy average value of the frequency domain signal in the full frequency domain, and a fourth ratio of an average energy value of the frequency domain signal of the second audio signal in a fourth preset frequency domain range to the energy average value of the frequency domain signal in the full frequency domain, where a frequency in the second preset frequency domain range is lower than a frequency in the fourth preset frequency domain range, and a frequency in the third preset frequency domain range is higher than the frequency in the fourth preset frequency domain range; and
when the first ratio is greater than the second ratio, if the third ratio is less than the fourth ratio and/or a ratio of the third ratio to the fourth ratio is greater than a ratio of a fifth ratio to a sixth ratio, determine that the user performs ear covering, where the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain.

When the ambient signal is a segment of second audio signal, the signal processing module 1102 is configured to:
send the second audio signal to a calculation unit, so that the calculation unit performs Fourier transform on the second audio signal and a first audio signal respectively to obtain a frequency domain signal of the first audio signal and a frequency domain signal of the second audio signal, where the first audio signal and the second audio signal are captured by different earphones; and
receive information sent by the calculation unit, and determine, based on the information, that the user performs ear covering, where the information indicates that a first ratio is greater than a second ratio and a third ratio is less than a fourth ratio, and/or a ratio of the third ratio to the fourth ratio is greater than a ratio of a fifth ratio to a sixth ratio, the first ratio is a ratio of an average energy value of the frequency domain signal of the second audio signal in a second preset frequency domain range to an average energy value of a frequency domain signal of a full frequency domain, the second ratio is a ratio of an average energy value of the frequency domain signal of the first audio signal in the second preset frequency domain range to the average energy value of the frequency domain signal of the full frequency domain, the third ratio is a ratio of an average energy value of the frequency domain signal of the second audio signal in a third preset frequency domain range to the average energy value of the frequency domain signal of the full frequency domain, the fourth ratio is a ratio of an average energy value of the frequency domain signal of the second audio signal in a fourth preset frequency domain range to the average energy value of the frequency domain signal of the full frequency domain, the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain, a frequency in the second preset frequency domain range is lower than a frequency in the fourth preset frequency domain range, and a frequency in the third preset frequency domain range is higher than the frequency in the fourth preset frequency domain range.

The detection module 1101 is further configured to:
if a ratio of an average energy value of the frequency domain signal of the first audio signal in a fifth preset frequency domain range to the average energy value of the frequency domain signal of the full frequency domain and a ratio of an average energy value of the frequency domain signal of the second audio signal in the fifth preset frequency domain range to the average energy value of the frequency domain signal of the full frequency domain each are not greater than a fifth preset threshold or a ratio of an average energy value of the frequency domain signal of the first audio signal in a sixth preset frequency domain range to the average energy value of the frequency domain signal of the full frequency domain and a ratio of an average energy value of the frequency domain signal of the second audio signal in the sixth preset frequency domain range to the average energy value of the frequency domain signal of the full frequency domain are respectively greater than a ratio of an average energy value of the frequency domain signal of the first audio signal in a seventh preset frequency domain range to the average energy value of the frequency domain signal of the full frequency domain and a ratio of an average energy value of the frequency domain signal of the second audio signal in the seventh preset frequency domain range to the average energy value of the frequency domain signal of the full frequency domain, obtain a Bluetooth signal of the headset, and obtain time strength distribution of the Bluetooth signal.

The signal processing module 1102 is configured to:
if a strength of a Bluetooth signal in a first time period is lower than a strength of a Bluetooth signal in a second time period and the strength of the Bluetooth signal in the first time period is lower than a ninth preset threshold in preset duration, determine that the user performs ear covering, where the second time period is earlier than the first time period.

The signal processing module 1102 is configured to:
if a ratio of an average energy value of a frequency domain signal of at least one segment of audio signal in the frequency domain signal of the first audio signal and the frequency domain signal of the second audio signal in an eighth preset frequency domain range to the average energy value of the frequency domain signal of the full frequency domain is greater than a sixth preset threshold and a ratio of an average energy value of the frequency domain signal of at least one segment of audio signal in the frequency domain signal of the first audio signal and the frequency domain signal of the second audio signal in a ninth preset frequency domain range to the average energy value of the frequency domain signal of the full frequency domain is also greater than the sixth preset threshold, determine that the user performs listening.

An energy peak in the frequency energy distribution of the frequency domain signal is in a preset frequency range.

A frequency domain of the audio signal includes at least a first frequency band, a second frequency band, and a third frequency band, a last frequency of the first frequency band is a 1^{st} frequency of the second frequency band, a last frequency of the second frequency band is a 1^{st} frequency of the third frequency band, and a difference between a seventh ratio of an average energy value of the first frequency band to an average energy value of the second frequency band and an eighth ratio of the average energy value of the second frequency band to an average energy value of the third frequency band is greater than a seventh preset threshold.

When the ambient signal is a segment of Bluetooth signal, the signal processing module 1102 is further configured to:
obtain time strength distribution of the Bluetooth signal based on the Bluetooth signal; and
if a strength of a Bluetooth signal in a first time period is lower than a strength of a Bluetooth signal in a second time period in the time strength distribution and the strength of the Bluetooth signal in the first time period is lower than a sixth preset threshold in preset duration, determine that the user performs ear covering, where the second time period is earlier than the first time period.

When the gesture executed by the user is ear covering, the target mode is either of a noise reduction enabled mode and a noise reduction transparent transmission disabled mode;
when a current mode of the headset is a noise reduction transparent transmission disabled mode, the target mode is a noise reduction enabled mode;
when a current mode of the headset is a noise reduction enabled mode, the target mode is a transparent transmission enabled mode; or
when a current mode of the headset is a transparent transmission enabled mode, the target mode is a noise reduction transparent transmission disabled mode.

Alternatively, when the gesture executed by the user is ear covering, the target mode is a noise reduction enabled mode; and
when the gesture executed by the user is listening, the target mode is a transparent transmission enabled mode.

Optionally, the apparatus further includes a triggering module, configured to: when a strength value of the Bluetooth signal of the headset is less than a tenth preset threshold, trigger to detect the gesture information.

The apparatus further includes a triggering module, configured to: when a preset signal is received, trigger to detect the gesture information, where the preset signal indicates that a wearable device detects that the user raises a hand.

For descriptions of the foregoing modules, refer to the foregoing embodiments. Details are not described herein again.

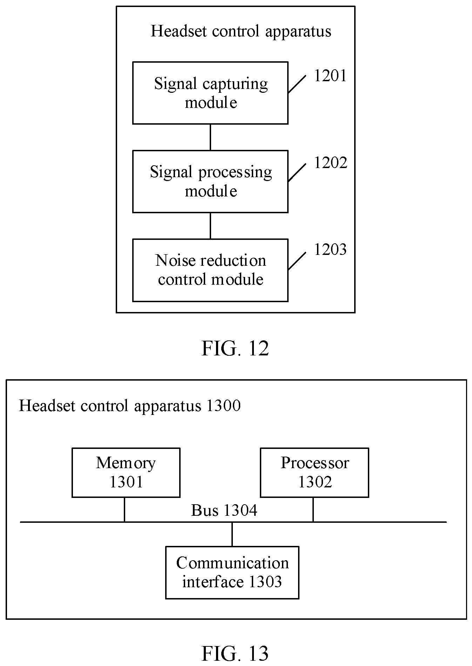

FIG. 12 is a schematic diagram of another headset control apparatus according to an embodiment of this application. As shown in FIG. 12, the apparatus includes a signal capturing module 1201, a signal processing module 1202, and a noise reduction control module 1203.

The signal capturing module 1201 is configured to capture an ambient signal around a headset.

The signal processing module 1202 is configured to extract a feature of the ambient signal.

The noise reduction control module 1203 is configured to adjust a mode of the headset to a target mode based on energy strength of a preset frequency band in the extracted feature of the ambient signal.

The ambient signal includes at least one of the following: an audio signal, an optical signal, and an ultrasonic signal.

When the ambient signal is a segment of audio signal, the signal processing module 1202 is configured to:
perform Fourier transform on the audio signal to obtain a frequency domain signal of the audio signal, and
calculate a ratio of an average energy value of the frequency domain signal in a first preset frequency domain range to an energy average value of a frequency domain signal in a full frequency domain; and
the noise reduction control module 1203 is configured to:
   if the ratio is greater than a first preset threshold, determine that the target mode is a first mode.

When the ambient signal is a segment of audio signal, the signal processing module 1202 is configured to:
perform Fourier transform on the audio signal to obtain a frequency domain signal of the audio signal, and
calculate a similarity value between frequency energy distribution of the frequency domain signal and preset frequency energy distribution; and
the noise reduction control module 1203 is configured to:
   if the similarity value is greater than a second preset threshold, determine that the target mode is a first mode.

When the ambient signal includes a first audio signal and a second audio signal, and a capturing time of the first audio signal is earlier than a capturing time of the second audio signal, the signal processing module 1202 is configured to:
perform Fourier transform on the first audio signal and the second audio signal respectively to obtain a frequency domain signal of the first audio signal and a frequency domain signal of the second audio signal, and
calculate a first ratio of an average energy value of the frequency domain signal of the second audio signal in a second preset frequency domain range to an energy average value of a frequency domain signal in a full frequency domain, a second ratio of an average energy value of the frequency domain signal of the first audio signal in the second preset frequency domain range to the energy average value of the frequency domain signal in the full frequency domain, a third ratio of an average energy value of the frequency domain signal of the second audio signal in a third preset frequency domain range to the energy average value of the frequency domain signal in the full frequency domain, and a fourth ratio of an average energy value of the frequency domain signal of the second audio signal in a fourth preset frequency domain range to the energy average value of the frequency domain signal in the full frequency domain, where a frequency in the second preset frequency domain range is lower than a frequency in the fourth preset frequency domain range, and a frequency in the third preset frequency domain range is higher than the frequency in the fourth preset frequency domain range; and
the noise reduction control module 1203 is configured to:
   when the first ratio is greater than the second ratio, if the third ratio is less than the fourth ratio and/or a ratio of the third ratio to the fourth ratio is greater than a ratio of a fifth ratio to a sixth ratio, determine that the target mode is a first mode, where the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain.

The noise reduction control module 1203 is further configured to: if a ratio of an average energy value of the frequency domain signal of the second audio signal in a fifth preset frequency domain range to the average energy value of the frequency domain signal of the full frequency domain is greater than a third preset threshold and a ratio of an average energy value of the frequency domain signal of the second audio signal in a sixth preset frequency domain range to the average energy value of the frequency domain signal of the full frequency domain is also greater than the third preset threshold, determine that the target mode is a second mode.

An energy peak in the frequency energy distribution of the frequency domain signal is in a preset frequency range.

Further, a frequency domain of the audio signal includes at least a first frequency band, a second frequency band, and a third frequency band, a last frequency of the first frequency band is a 1^{st} frequency of the second frequency band, a last frequency of the second frequency band is a 1^{st} frequency of the third frequency band, and a difference between a seventh ratio of an average energy value of the first frequency band to an average energy value of the second frequency band and an eighth ratio of the average energy value of the second frequency band to an average energy value of the third frequency band is greater than a seventh preset threshold.

When the target mode is the first mode, the first mode is either of a noise reduction enabled mode and a noise reduction transparent transmission disabled mode;
when a current mode of the headset is a noise reduction transparent transmission disabled mode, the first mode is a noise reduction enabled mode;
when a current mode of the headset is a noise reduction enabled mode, the first mode is a transparent transmission enabled mode; or
when a current mode of the headset is a transparent transmission enabled mode, the first mode is a noise reduction transparent transmission disabled mode.

Alternatively, when the target mode is the first mode, the first target mode is a noise reduction enabled mode; and
when the target mode is the second mode, the second mode is a transparent transmission enabled mode.

The apparatus further includes a triggering module, configured to:
when a strength value of a Bluetooth signal of the headset is less than a tenth preset threshold, trigger to detect gesture information.

The apparatus further includes a triggering module, configured to:
when a preset signal is received, trigger to detect gesture information, where the preset signal indicates that a wearable device detects that the user raises a hand.

For descriptions of the foregoing modules, refer to the foregoing embodiments. Details are not described herein again.

In this embodiment, the headset control apparatus is presented in a form of a module. The "module" herein may be an application-specific integrated circuit (application-specific integrated circuit, ASIC), a processor and a memory that execute one or more software or firmware programs, an integrated logic circuit, and/or another device that can provide the foregoing functions.

In addition, the detection module 1101, the signal processing module 1102, the noise reduction control module 1103, the signal capturing module 1201, the signal processing module 1202, and the noise reduction control module 1203 may be implemented by using a processor 1302 of a headset control apparatus shown in FIG. 13.

FIG. 13 is a schematic diagram of a hardware structure of a headset control apparatus according to an embodiment of this application. The headset control apparatus 1300 shown in FIG. 13 (the apparatus 1300 may be specifically a computer device) includes a memory 1301, a processor 1302, a communication interface 1303, and a bus 1304. The memory 1301, the processor 1302, and the communication interface 1303 are communicatively connected to each other through the bus 1304.

The memory 1301 may be a read-only memory (Read Only Memory, ROM), a static storage device, a dynamic storage device, or a random access memory (Random Access Memory, RAM).

The memory 1301 may store a program. When the program stored in the memory 1301 is executed by the processor 1302, the processor 1302 and the communication interface 1303 are configured to perform the steps of the headset control apparatus in this embodiment of this application.

The processor 1302 may be a general-purpose central processing unit (Central Processing Unit, CPU), a microprocessor, an application-specific integrated circuit (Application Specific Integrated Circuit, ASIC), a graphics processing unit (graphics processing unit, GPU), or one or more integrated circuits, and is configured to execute a related program, to implement a function that needs to be performed by a unit in the headset control apparatus in this embodiment of this application, or perform the headset control method in the method embodiments of this application.

The processor 1302 may alternatively be an integrated circuit chip and has a signal processing capability. In an implementation process, the steps of the headset control method in this application may be completed by using a hardware integrated logic circuit or an instruction in a form of software in the processor 1302. The processor 1302 may alternatively be a general-purpose processor, a digital signal processor (Digital Signal Processing, DSP), an application-specific integrated circuit (ASIC), a field programmable gate array (Field Programmable Gate Array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1301. The processor 1302 reads information in the memory 1301, and completes, in combination with hardware of the processor, a function that needs to be performed by a unit included in the headset control apparatus in embodiments of this application, or performs the headset control method in the method embodiments of this application.

The communication interface 1303 uses a transceiver apparatus, for example, but not limited to, a transceiver, to implement communication between the apparatus 1300 and another device or a communication network. For example, data may be obtained through the communication interface 1303.

The bus 1304 may include a path for transmitting information between the components (for example, the memory 1301, the processor 1302, and the communication interface 1303) of the apparatus 1300.

It should be noted that although only the memory, the processor, and the communication interface of the apparatus 1300 shown in FIG. 13 are illustrated, in a specific implementation process, a person skilled in the art should understand that the apparatus 1300 further includes other components necessary for normal running. In addition, according to a specific requirement, a person skilled in the art should understand that the apparatus 1300 may further include hardware components for implementing other additional functions. In addition, a person skilled in the art should understand that the apparatus 1300 may include only components required for implementing embodiments of this application, but not necessarily include all the components shown in FIG. 13.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product is run on a computer or a processor, the computer or the processor is enabled to perform one or more steps in any one of the foregoing methods.

It may be clearly understood by a person skilled in the art that, for the purpose of convenient and brief description, for a detailed working process of the foregoing system, apparatus, and unit, refer to specific descriptions of corresponding steps in the foregoing method embodiments. Details are not described herein again.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

In the several embodiments provided in this application, it should be understood that the disclosed system, apparatus and method may be implemented in other manners. For example, division into the units is merely logical function division and may be another division in actual implementation. For example, a plurality of units or components may be combined or integrated into another system, or some features may be ignored or not performed. The displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objective of the solutions of embodiments.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid state disk (solid state disk, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A headset control method, comprising:
detecting gesture information;
determining, based on the gesture information, a gesture executed by a user, wherein the gesture information is an ambient signal captured by a headset, and the gesture comprises either of ear covering that forms a cavity around the headset and listening that forms an open reflective surface around the headset; and
adjusting a mode of the headset to a target mode based on the gesture executed by the user.

2. The method according to claim 1, wherein the ambient signal comprises at least one of the following: an audio signal, a Bluetooth signal, an optical signal, and an ultrasonic signal.

3. The method according to claim 2, wherein when the ambient signal is a segment of audio signal, the determining, based on the gesture information, a gesture executed by a user comprises:
performing Fourier transform on the audio signal to obtain a frequency domain signal of the audio signal;
calculating a ratio of an average energy value of the frequency domain signal in a first preset frequency domain range to an energy average value of a frequency domain signal in a full frequency domain; and
if the ratio is greater than a first preset threshold, determining that the user performs ear covering.

4. The method according to claim 2, wherein when the ambient signal is a segment of audio signal, the determining, based on the gesture information, a gesture executed by a user comprises:
performing Fourier transform on the audio signal to obtain a frequency domain signal of the audio signal;
calculating a similarity value between frequency energy distribution of the frequency domain signal and preset frequency energy distribution; and
if the similarity value is greater than a second preset threshold, determining that the user performs ear covering.

5. The method according to claim 2, wherein when the ambient signal comprises a first audio signal and a second audio signal, and a capturing time of the first audio signal is earlier than a capturing time of the second audio signal, the determining, based on the gesture information, a gesture executed by a user comprises:
performing Fourier transform on the first audio signal and the second audio signal respectively to obtain a frequency domain signal of the first audio signal and a frequency domain signal of the second audio signal;
calculating a first ratio of an average energy value of the frequency domain signal of the second audio signal in a second preset frequency domain range to an energy average value of a frequency domain signal in a full frequency domain, a second ratio of an average energy value of the frequency domain signal of the first audio signal in the second preset frequency domain range to the energy average value of the frequency domain signal in the full frequency domain, a third ratio of an average energy value of the frequency domain signal of the second audio signal in a third preset frequency domain range to the energy average value of the frequency domain signal in the full frequency domain, and a fourth ratio of an average energy value of the frequency domain signal of the second audio signal in a fourth preset frequency domain range to the energy average value of the frequency domain signal in the full frequency domain, wherein a frequency in the second preset frequency domain range is lower than a frequency in the fourth preset frequency domain range, and a frequency in the third preset frequency domain range is higher than the frequency in the fourth preset frequency domain range; and
when the first ratio is greater than the second ratio, if the third ratio is less than the fourth ratio and/or a ratio of the third ratio to the fourth ratio is greater than a ratio of a fifth ratio to a sixth ratio, determining that the user performs ear covering, wherein the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain.

6. The method according to claim 2, wherein when the ambient signal is a segment of second audio signal, the determining, based on the gesture information, a gesture executed by a user comprises:
sending the second audio signal to a calculation unit, so that the calculation unit performs Fourier transform on the second audio signal and a first audio signal respectively to obtain a frequency domain signal of the first audio signal and a frequency domain signal of the second audio signal, wherein the first audio signal and the second audio signal are captured by different earphones; and
receiving information sent by the calculation unit, and determining, based on the information, that the user performs ear covering, wherein the information indicates that a first ratio is greater than a second ratio and a third ratio is less than a fourth ratio, and/or a ratio of the third ratio to the fourth ratio is greater than a ratio of a fifth ratio to a sixth ratio, the first ratio is a ratio of an average energy value of the frequency domain signal of the second audio signal in a second preset frequency domain range to an average energy value of a frequency domain signal of a full frequency domain, the second ratio is a ratio of an average energy value of the frequency domain signal of the first audio signal in the second preset frequency domain range to the average energy value of the frequency domain signal of the full frequency domain, the third ratio is a ratio of an average energy value of the frequency domain signal of the second audio signal in a third preset frequency domain range to the average energy value of the frequency domain signal of the full frequency domain, the fourth ratio is a ratio of an average energy value of the frequency domain signal of the second audio signal in a fourth preset frequency domain range to the average energy value of the frequency domain signal of the full frequency domain, the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain, a frequency in the second preset frequency domain range is lower than a frequency in the fourth preset frequency domain range, and a frequency in the third preset frequency domain range is higher than the frequency in the fourth preset frequency domain range.

7. The method according to claim 6, wherein the method further comprises: if a ratio of an average energy value of the frequency domain signal of the first audio signal in a fifth preset frequency domain range to the average energy value of the frequency domain signal of the full frequency domain and a ratio of an average energy value of the frequency domain signal of the second audio signal in the fifth preset frequency domain range to the average energy value of the frequency domain signal of the full frequency domain each are not greater than a third preset threshold or a ratio of an average energy value of the frequency domain signal of the first audio signal in a sixth preset frequency domain range to the average energy value of the frequency domain signal of the full frequency domain and a ratio of an average energy value of the frequency domain signal of the second audio signal in the sixth preset frequency domain range to the average energy value of the frequency domain signal of the full frequency domain are respectively greater than a ratio of an average energy value of the frequency domain signal of the first audio signal in a seventh preset frequency domain range to the average energy value of the frequency domain signal of the full frequency domain and a ratio of an average energy value of the frequency domain signal of the second audio signal in the seventh preset frequency domain range to the average energy value of the frequency domain signal of the full frequency domain, obtaining a Bluetooth signal of the headset, and obtaining time strength distribution of the Bluetooth signal; and
if a strength of a Bluetooth signal in a first time period is lower than a strength of a Bluetooth signal in a second time period and the strength of the Bluetooth signal in the first time period is lower than a fourth preset threshold in preset duration, determining that the user performs ear covering, wherein the second time period is earlier than the first time period.

8. The method according to any one of claims 5 to 7, wherein the method comprises: if a ratio of an average energy value of the frequency domain signal of the second audio signal in an eighth preset frequency domain range to the average energy value of the frequency domain signal of the full frequency domain is greater than the fourth preset threshold and a ratio of an average energy value of the frequency domain signal of the second audio signal in a ninth preset frequency domain range to the average energy value of the frequency domain signal of the full frequency domain is also greater than the fourth preset threshold, determining that the user performs listening.

9. The method according to any one of claims 3 to 8, wherein an energy peak in the frequency energy distribution of the frequency domain signal is in a preset frequency range.

10. The method according to any one of claims 3 to 9, wherein a frequency domain of the audio signal comprises at least a first frequency band, a second frequency band, and a third frequency band, a last frequency of the first frequency band is a 1^{st} frequency of the second frequency band, a last frequency of the second frequency band is a 1^{st} frequency of the third frequency band, and a difference between a seventh ratio of an average energy value of the first frequency band to an average energy value of the second frequency band and an eighth ratio of the average energy value of the second frequency band to an average energy value of the third frequency band is greater than a fifth preset threshold.

11. The method according to claim 2, wherein when the ambient signal is a segment of Bluetooth signal, the determining, based on the gesture information, a gesture executed by a user comprises:
obtaining time strength distribution of the Bluetooth signal based on the Bluetooth signal; and
if a strength of a Bluetooth signal in a first time period is lower than a strength of a Bluetooth signal in a second time period in the time strength distribution and the strength of the Bluetooth signal in the first time period is lower than a sixth preset threshold in preset duration, determining that the user performs ear covering, wherein the second time period is earlier than the first time period.

12. The method according to any one of claims 1 to 11, wherein when the gesture executed by the user is ear covering, the target mode is either of a noise reduction enabled mode and a noise reduction transparent transmission disabled mode;
when a current mode of the headset is a noise reduction transparent transmission disabled mode, the target mode is a noise reduction enabled mode;
when a current mode of the headset is a noise reduction enabled mode, the target mode is a transparent transmission enabled mode; or
when a current mode of the headset is a transparent transmission enabled mode, the target mode is a noise reduction transparent transmission disabled mode.

13. The method according to any one of claims 1 to 11, wherein when the gesture executed by the user is ear covering, the target mode is a noise reduction enabled mode; and
when the gesture executed by the user is listening, the target mode is a transparent transmission enabled mode.

14. The method according to any one of claims 1 to 13, wherein the method further comprises:
when a strength value of the Bluetooth signal of the headset is less than a seventh preset threshold, starting to detect the gesture information.

15. The method according to any one of claims 1 to 13, wherein the method further comprises:
when a preset signal is received, starting to detect the gesture information, wherein the preset signal indicates that a wearable device detects that the user raises a hand.

16. A headset control method, comprising:
capturing an ambient signal around a headset, and extracting a feature of the ambient signal; and
adjusting a mode of the headset to a target mode based on energy strength of a preset frequency band in the extracted feature of the ambient signal.

17. The method according to claim 16, wherein the ambient signal comprises at least one of the following: an audio signal, an optical signal, and an ultrasonic signal.

18. The method according to claim 17, wherein when the ambient signal is a segment of audio signal, the extracting a feature of the ambient signal comprises:
performing Fourier transform on the audio signal to obtain a frequency domain signal of the audio signal, and
calculating a ratio of an average energy value of the frequency domain signal in a first preset frequency domain range to an energy average value of a frequency domain signal in a full frequency domain; and
the adjusting a mode of the headset to a target mode based on energy strength of a preset frequency band in the extracted feature of the ambient signal comprises:
if the ratio is greater than a first preset threshold, determining that the target mode is a first mode.

19. The method according to claim 17, wherein when the ambient signal is a segment of audio signal, the extracting a feature of the ambient signal comprises:
performing Fourier transform on the audio signal to obtain a frequency domain signal of the audio signal, and
calculating a similarity value between frequency energy distribution of the frequency domain signal and preset frequency energy distribution; and
the adjusting a mode of the headset to a target mode based on energy strength of a preset frequency band in the extracted feature of the ambient signal comprises:
if the similarity value is greater than a second preset threshold, determining that the target mode is a first mode.

20. The method according to claim 17, wherein when the ambient signal comprises a first audio signal and a second audio signal, and a capturing time of the first audio signal is earlier than a capturing time of the second audio signal, the extracting a feature of the ambient signal comprises:
performing Fourier transform on the first audio signal and the second audio signal respectively to obtain a frequency domain signal of the first audio signal and a frequency domain signal of the second audio signal, and
calculating a first ratio of an average energy value of the frequency domain signal of the second audio signal in a second preset frequency domain range to an energy average value of a frequency domain signal in a full frequency domain, a second ratio of an average energy value of the frequency domain signal of the first audio signal in the second preset frequency domain range to the energy average value of the frequency domain signal in the full frequency domain, a third ratio of an average energy value of the frequency domain signal of the second audio signal in a third preset frequency domain range to the energy average value of the frequency domain signal in the full frequency domain, and a fourth ratio of an average energy value of the frequency domain signal of the second audio signal in a fourth preset frequency domain range to the energy average value of the frequency domain signal in the full frequency domain, wherein a frequency in the second preset frequency domain range is lower than a frequency in the fourth preset frequency domain range, and a frequency in the third preset frequency domain range is higher than the frequency in the fourth preset frequency domain range; and
the adjusting a mode of the headset to a target mode based on energy strength of a preset frequency band in the extracted feature of the ambient signal comprises:
when the first ratio is greater than the second ratio, if the third ratio is less than the fourth ratio and/or a ratio of the third ratio to the fourth ratio is greater than a ratio of a fifth ratio to a sixth ratio, determining that the target mode is a first mode, wherein the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain.

21. The method according to claim 20, further comprising: if a ratio of an average energy value of the frequency domain signal of the second audio signal in a fifth preset frequency domain range to the average energy value of the frequency domain signal of the full frequency domain is greater than a third preset threshold and a ratio of an average energy value of the frequency domain signal of the second audio signal in a sixth preset frequency domain range to the average energy value of the frequency domain signal of the full frequency domain is also greater than the third preset threshold, determining that the target mode is a second mode.

22. The method according to any one of claims 18 to 21, wherein an energy peak in the frequency energy distribution of the frequency domain signal is in a preset frequency range.

23. The method according to any one of claims 18 to 22, wherein a frequency domain of the audio signal comprises at least a first frequency band, a second frequency band, and a third frequency band, a last frequency of the first frequency band is a 1^{st} frequency of the second frequency band, a last frequency of the second frequency band is a 1^{st} frequency of the third frequency band, and a difference between a seventh ratio of an average energy value of the first frequency band to an average energy value of the second frequency band and an eighth ratio of the average energy value of the second frequency band to an average energy value of the third frequency band is greater than a fourth preset threshold.

24. The method according to any one of claims 16 to 23, wherein when the target mode is the first mode, the first mode is either of a noise reduction enabled mode and a noise reduction transparent transmission disabled mode;
when a current mode of the headset is a noise reduction transparent transmission disabled mode, the first mode is a noise reduction enabled mode;
when a current mode of the headset is a noise reduction enabled mode, the first mode is a transparent transmission enabled mode; or
when a current mode of the headset is a transparent transmission enabled mode, the first mode is a noise reduction transparent transmission disabled mode.

25. The method according to any one of claims 16 to 23, wherein when the target mode is the first mode, the first target mode is a noise reduction enabled mode; and
when the target mode is the second mode, the second mode is a transparent transmission enabled mode.

26. The method according to any one of claims 16 to 25, wherein the method further comprises:
when a strength value of a Bluetooth signal of the headset is less than a fifth preset threshold, starting to detect gesture information.

27. The method according to any one of claims 16 to 25, wherein the method further comprises:
when a preset signal is received, starting to detect gesture information, wherein the preset signal indicates that a wearable device detects that the user raises a hand.

28. A headset control apparatus, comprising:
a detection module, configured to detect gesture information;
a signal processing module, configured to determine, based on the gesture information, a gesture executed by a user, wherein the gesture information is an ambient signal captured by a headset, and the gesture comprises either of ear covering that forms a cavity around the headset and listening that forms an open reflective surface around the headset; and
a noise reduction control module, configured to adjust a mode of the headset to a target mode based on the gesture executed by the user.

29. The apparatus according to claim 28, wherein the ambient signal comprises at least one of the following: an audio signal, a Bluetooth signal, an optical signal, and an ultrasonic signal.

30. The apparatus according to claim 29, wherein when the ambient signal is a segment of audio signal, the signal processing module is configured to:
perform Fourier transform on the audio signal to obtain a frequency domain signal of the audio signal;
calculate a ratio of an average energy value of the frequency domain signal in a first preset frequency domain range to an energy average value of a frequency domain signal in a full frequency domain; and
if the ratio is greater than a first preset threshold, determine that the user performs ear covering.

31. The apparatus according to claim 29, wherein when the ambient signal is a segment of audio signal, the signal processing module is configured to:
perform Fourier transform on the audio signal to obtain a frequency domain signal of the audio signal;
calculate a similarity value between frequency energy distribution of the frequency domain signal and preset frequency energy distribution; and
if the similarity value is greater than a second preset threshold, determine that the user performs ear covering.

32. The apparatus according to claim 29, wherein when the ambient signal comprises a first audio signal and a second audio signal, and a capturing time of the first audio signal is earlier than a capturing time of the second audio signal, the signal processing module is configured to:
perform Fourier transform on the first audio signal and the second audio signal respectively to obtain a frequency domain signal of the first audio signal and a frequency domain signal of the second audio signal;
calculate a first ratio of an average energy value of the frequency domain signal of the second audio signal in a second preset frequency domain range to an energy average value of a frequency domain signal in a full frequency domain, a second ratio of an average energy value of the frequency domain signal of the first audio signal in the second preset frequency domain range to the energy average value of the frequency domain signal in the full frequency domain, a third ratio of an average energy value of the frequency domain signal of the second audio signal in a third preset frequency domain range to the energy average value of the frequency domain signal in the full frequency domain, and a fourth ratio of an average energy value of the frequency domain signal of the second audio signal in a fourth preset frequency domain range to the energy average value of the frequency domain signal in the full frequency domain, wherein a frequency in the second preset frequency domain range is lower than a frequency in the fourth preset frequency domain range, and a frequency in the third preset frequency domain range is higher than the frequency in the fourth preset frequency domain range; and
when the first ratio is greater than the second ratio, if the third ratio is less than the fourth ratio and/or a ratio of the third ratio to the fourth ratio is greater than a ratio of a fifth ratio to a sixth ratio, determine that the user performs ear covering, wherein the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain.

33. The apparatus according to claim 29, wherein the apparatus further comprises a communication module, and when the ambient signal is a segment of second audio signal,
the communication module is configured to send the second audio signal to a calculation unit, so that the calculation unit performs Fourier transform on the second audio signal and a first audio signal respectively to obtain a frequency domain signal of the first audio signal and a frequency domain signal of the second audio signal, wherein the first audio signal and the second audio signal are captured by different earphones; and
the signal processing module is configured to: receive information sent by the calculation unit, and determine, based on the information, that the user performs ear covering, wherein the information indicates that a first ratio is greater than a second ratio and a third ratio is less than a fourth ratio, and/or a ratio of the third ratio to the fourth ratio is greater than a ratio of a fifth ratio to a sixth ratio, the first ratio is a ratio of an average energy value of the frequency domain signal of the second audio signal in a second preset frequency domain range to an average energy value of a frequency domain signal of a full frequency domain, the second ratio is a ratio of an average energy value of the frequency domain signal of the first audio signal in the second preset frequency domain range to the average energy value of the frequency domain signal of the full frequency domain, the third ratio is a ratio of an average energy value of the frequency domain signal of the second audio signal in a third preset frequency domain range to the average energy value of the frequency domain signal of the full frequency domain, the fourth ratio is a ratio of an average energy value of the frequency domain signal of the second audio signal in a fourth preset frequency domain range to the average energy value of the frequency domain signal of the full frequency domain, the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain, a frequency in the second preset frequency domain range is lower than a frequency in the fourth preset frequency domain range, and a frequency in the third preset frequency domain range is higher than the frequency in the fourth preset frequency domain range.

34. The apparatus according to claim 33, wherein the detection module is further configured to: if a ratio of an average energy value of the frequency domain signal of the first audio signal in a fifth preset frequency domain range to the average energy value of the frequency domain signal of the full frequency domain and a ratio of an average energy value of the frequency domain signal of the second audio signal in the fifth preset frequency domain range to the average energy value of the frequency domain signal of the full frequency domain each are not greater than a third preset threshold or a ratio of an average energy value of the frequency domain signal of the first audio signal in a sixth preset frequency domain range to the average energy value of the frequency domain signal of the full frequency domain and a ratio of an average energy value of the frequency domain signal of the second audio signal in the sixth preset frequency domain range to the average energy value of the frequency domain signal of the full frequency domain are respectively greater than a ratio of an average energy value of the frequency domain signal of the first audio signal in a seventh preset frequency domain range to the average energy value of the frequency domain signal of the full frequency domain and a ratio of an average energy value of the frequency domain signal of the second audio signal in the seventh preset frequency domain range to the average energy value of the frequency domain signal of the full frequency domain, obtain a Bluetooth signal of the headset, and obtain time strength distribution of the Bluetooth signal; and
the signal processing module is configured to: if a strength of a Bluetooth signal in a first time period is lower than a strength of a Bluetooth signal in a second time period and the strength of the Bluetooth signal in the first time period is lower than a fourth preset threshold in preset duration, determine that the user performs ear covering, wherein the second time period is earlier than the first time period.

35. The apparatus according to any one of claims 32 to 34, wherein the signal processing module is configured to: if a ratio of an average energy value of the frequency domain signal of the second audio signal in an eighth preset frequency domain range to the average energy value of the frequency domain signal of the full frequency domain is greater than the fourth preset threshold and a ratio of an average energy value of the frequency domain signal of the second audio signal in a ninth preset frequency domain range to the average energy value of the frequency domain signal of the full frequency domain is also greater than the fourth preset threshold, determine that the user performs listening.

36. The apparatus according to any one of claims 30 to 35, wherein an energy peak in the frequency energy distribution of the frequency domain signal is in a preset frequency range.

37. The apparatus according to any one of claims 30 to 36, wherein a frequency domain of the audio signal comprises at least a first frequency band, a second frequency band, and a third frequency band, a last frequency of the first frequency band is a 1^{st} frequency of the second frequency band, a last frequency of the second frequency band is a 1^{st} frequency of the third frequency band, and a difference between a seventh ratio of an average energy value of the first frequency band to an average energy value of the second frequency band and an eighth ratio of the average energy value of the second frequency band to an average energy value of the third frequency band is greater than a fifth preset threshold.

38. The apparatus according to claim 29, wherein when the ambient signal is a segment of Bluetooth signal, the signal processing module is configured to:
obtain time strength distribution of the Bluetooth signal based on the Bluetooth signal; and
if a strength of a Bluetooth signal in a first time period is lower than a strength of a Bluetooth signal in a second time period in the time strength distribution and the strength of the Bluetooth signal in the first time period is lower than a sixth preset threshold in preset duration, determine that the user performs ear covering, wherein the second time period is earlier than the first time period.

39. The apparatus according to any one of claims 28 to 38, wherein when the gesture executed by the user is ear covering, the target mode is either of a noise reduction enabled mode and a noise reduction transparent transmission disabled mode;
when a current mode of the headset is a noise reduction transparent transmission disabled mode, the target mode is a noise reduction enabled mode;
when a current mode of the headset is a noise reduction enabled mode, the target mode is a transparent transmission enabled mode; or
when a current mode of the headset is a transparent transmission enabled mode, the target mode is a noise reduction transparent transmission disabled mode.

40. The apparatus according to any one of claims 28 to 38, wherein when the gesture executed by the user is ear covering, the target mode is a noise reduction enabled mode; and
when the gesture executed by the user is listening, the target mode is a transparent transmission enabled mode.

41. The apparatus according to any one of claims 28 to 40, wherein the apparatus further comprises a triggering module, configured to:
when a strength value of the Bluetooth signal of the headset is less than a seventh preset threshold, start to detect the gesture information.

42. The apparatus according to any one of claims 28 to 40, wherein the apparatus further comprises a triggering module, configured to:
when a preset signal is received, start to detect the gesture information, wherein the preset signal indicates that a wearable device detects that the user raises a hand.

43. A headset control apparatus, comprising:
a signal capturing module, configured to capture an ambient signal around a headset;
a signal processing module, configured to extract a feature of the ambient signal; and
a noise reduction control module, configured to adjust a mode of the headset to a target mode based on energy strength of a preset frequency band in the extracted feature of the ambient signal.

44. The apparatus according to claim 43, wherein the ambient signal comprises at least one of the following: an audio signal, an optical signal, and an ultrasonic signal.

45. The apparatus according to claim 44, wherein when the ambient signal is a segment of audio signal, the signal processing module is configured to:
perform Fourier transform on the audio signal to obtain a frequency domain signal of the audio signal, and
calculate a ratio of an average energy value of the frequency domain signal in a first preset frequency domain range to an energy average value of a frequency domain signal in a full frequency domain; and
the noise reduction control module is configured to:
if the ratio is greater than a first preset threshold, determine that the target mode is a first mode.

46. The apparatus according to claim 44, wherein when the ambient signal is a segment of audio signal, the signal processing module is configured to:
perform Fourier transform on the audio signal to obtain a frequency domain signal of the audio signal, and
calculate a similarity value between frequency energy distribution of the frequency domain signal and preset frequency energy distribution; and
the noise reduction control module is configured to:
if the similarity value is greater than a second preset threshold, determine that the target mode is a first mode.

47. The apparatus according to claim 44, wherein when the ambient signal comprises a first audio signal and a second audio signal, and a capturing time of the first audio signal is earlier than a capturing time of the second audio signal, the signal processing module is configured to:
perform Fourier transform on the first audio signal and the second audio signal respectively to obtain a frequency domain signal of the first audio signal and a frequency domain signal of the second audio signal, and
calculate a first ratio of an average energy value of the frequency domain signal of the second audio signal in a second preset frequency domain range to an energy average value of a frequency domain signal in a full frequency domain, a second ratio of an average energy value of the frequency domain signal of the first audio signal in the second preset frequency domain range to the energy average value of the frequency domain signal in the full frequency domain, a third ratio of an average energy value of the frequency domain signal of the second audio signal in a third preset frequency domain range to the energy average value of the frequency domain signal in the full frequency domain, and a fourth ratio of an average energy value of the frequency domain signal of the second audio signal in a fourth preset frequency domain range to the energy average value of the frequency domain signal in the full frequency domain, wherein a frequency in the second preset frequency domain range is lower than a frequency in the fourth preset frequency domain range, and a frequency in the third preset frequency domain range is higher than the frequency in the fourth preset frequency domain range; and
the noise reduction control module is configured to:
when the first ratio is greater than the second ratio, if the third ratio is less than the fourth ratio and/or a ratio of the third ratio to the fourth ratio is greater than a ratio of a fifth ratio to a sixth ratio, determine that the target mode is a first mode, wherein the fifth ratio is a ratio of an average energy value of the frequency domain signal of the first audio signal in the third preset frequency domain range to the average energy value of the frequency domain signal of the full frequency domain, and the sixth ratio is a ratio of an average energy value of the frequency domain signal of the first audio signal in the fourth preset frequency domain range to the average energy value of the frequency domain signal of the full frequency domain.

48. The apparatus according to claim 47, wherein the noise reduction control module is further configured to: if a ratio of an average energy value of the frequency domain signal of the second audio signal in a fifth preset frequency domain range to the average energy value of the frequency domain signal of the full frequency domain is greater than a third preset threshold and a ratio of an average energy value of the frequency domain signal of the second audio signal in a sixth preset frequency domain range to the average energy value of the frequency domain signal of the full frequency domain is also greater than the third preset threshold, determine that the target mode is a second mode.

49. The apparatus according to any one of claims 45 to 48, wherein an energy peak in the frequency energy distribution of the frequency domain signal is in a preset frequency range.

50. The apparatus according to any one of claims 45 to 49, wherein a frequency domain of the audio signal comprises at least a first frequency band, a second frequency band, and a third frequency band, a last frequency of the first frequency band is a 1^{st} frequency of the second frequency band, a last frequency of the second frequency band is a 1^{st} frequency of the third frequency band, and a difference between a seventh ratio of an average energy value of the first frequency band to an average energy value of the second frequency band and an eighth ratio of the average energy value of the second frequency band to an average energy value of the third frequency band is greater than a fourth preset threshold.

51. The apparatus according to any one of claims 43 to 50, wherein when the target mode is the first mode, the first mode is either of a noise reduction enabled mode and a noise reduction transparent transmission disabled mode;
when a current mode of the headset is a noise reduction transparent transmission disabled mode, the first mode is a noise reduction enabled mode;
when a current mode of the headset is a noise reduction enabled mode, the first mode is a transparent transmission enabled mode; or
when a current mode of the headset is a transparent transmission enabled mode, the first mode is a noise reduction transparent transmission disabled mode.

52. The apparatus according to any one of claims 43 to 50, wherein when the target mode is the first mode, the first target mode is a noise reduction enabled mode; and
when the target mode is the second mode, the second mode is a transparent transmission enabled mode.

53. The apparatus according to any one of claims 43 to 52, wherein the apparatus further comprises a triggering module, configured to:
when a strength value of a Bluetooth signal of the headset is less than a fifth preset threshold, start to detect gesture information.

54. The apparatus according to any one of claims 43 to 52, wherein the apparatus further comprises a triggering module, configured to:
when a preset signal is received, start to detect gesture information, wherein the preset signal indicates that a wearable device detects that the user raises a hand.

55. A headset control apparatus, comprising a processor and a memory, wherein the memory is configured to store program code, and the processor is configured to invoke the program code to perform the method according to any one of claims 1 to 15 and/or the method according to any one of claims 16 to 27.

56. A computer-readable storage medium, wherein the computer-readable storage medium stores a computer program, and the computer program is executed by a processor to implement the method according to any one of claims 1 to 15 and/or the method according to any one of claims 16 to 27.

57. A computer program product, wherein when the computer program product runs on a computer, the computer is enabled to perform the method according to any one of claims 1 to 15 and/or the method according to any one of claims 16 to 27.
